(19) Europäisches Patentamt
European Patent Office
Office européen des brevets

(11) EP 4 631 912 A1

(12) **EUROPEAN PATENT APPLICATION**
published in accordance with Art. 153(4) EPC

(43) Date of publication:
**15.10.2025 Bulletin 2025/42**

(21) Application number: **23900527.5**

(22) Date of filing: **28.11.2023**

(51) International Patent Classification (IPC):
***C01B 25/14*** *(2006.01)* ***C01B 25/10*** *(2006.01)*
***H01B 1/06*** *(2006.01)* ***H01B 1/10*** *(2006.01)*
***H01M 10/0562*** *(2010.01)*

(52) Cooperative Patent Classification (CPC):
**C01B 25/10; C01B 25/14; H01B 1/06; H01B 1/10; H01M 10/0562;** Y02E 60/10

(86) International application number:
**PCT/JP2023/042602**

(87) International publication number:
**WO 2024/122411 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 JP 2022196513**

(71) Applicants:
- **Idemitsu Kosan Co., Ltd.**
  **Chiyoda-ku**
  **Tokyo 100-8321 (JP)**
- **Osaka Research Institute of Industrial Science and Technology**
  **Izumi-shi, Osaka 594-1157 (JP)**

(72) Inventors:
- **UTSUNO, Futoshi**
  **Tokyo 100-8321 (JP)**
- **HIGUCHI, Hiroyuki**
  **Tokyo 100-8321 (JP)**
- **KATO, Atsutaka**
  **Osaka-shi, Osaka 536-8553 (JP)**
- **YAMAMOTO, Mari**
  **Osaka-shi, Osaka 536-8553 (JP)**
- **TAKAHASHI, Masanari**
  **Osaka-shi, Osaka 536-8553 (JP)**

(74) Representative: **Vossius & Partner Patentanwälte Rechtsanwälte mbB**
**Siebertstrasse 3**
**81675 München (DE)**

# (54) COMPOUND, COMPOSITION, SOLID ELECTROLYTE MATERIAL, SHEET FOR BATTERY, BATTERY, AND METHOD FOR PRODUCING COMPOUND

(57) Provided is a compound comprising repeating units represented by formula (1) as a noncydic structure.

(In formula (1), $X^1$ is a chalcogen atom. R is a hydrogen atom or a substitution group.)

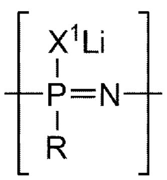

(1)

EP 4 631 912 A1

Fig. 1

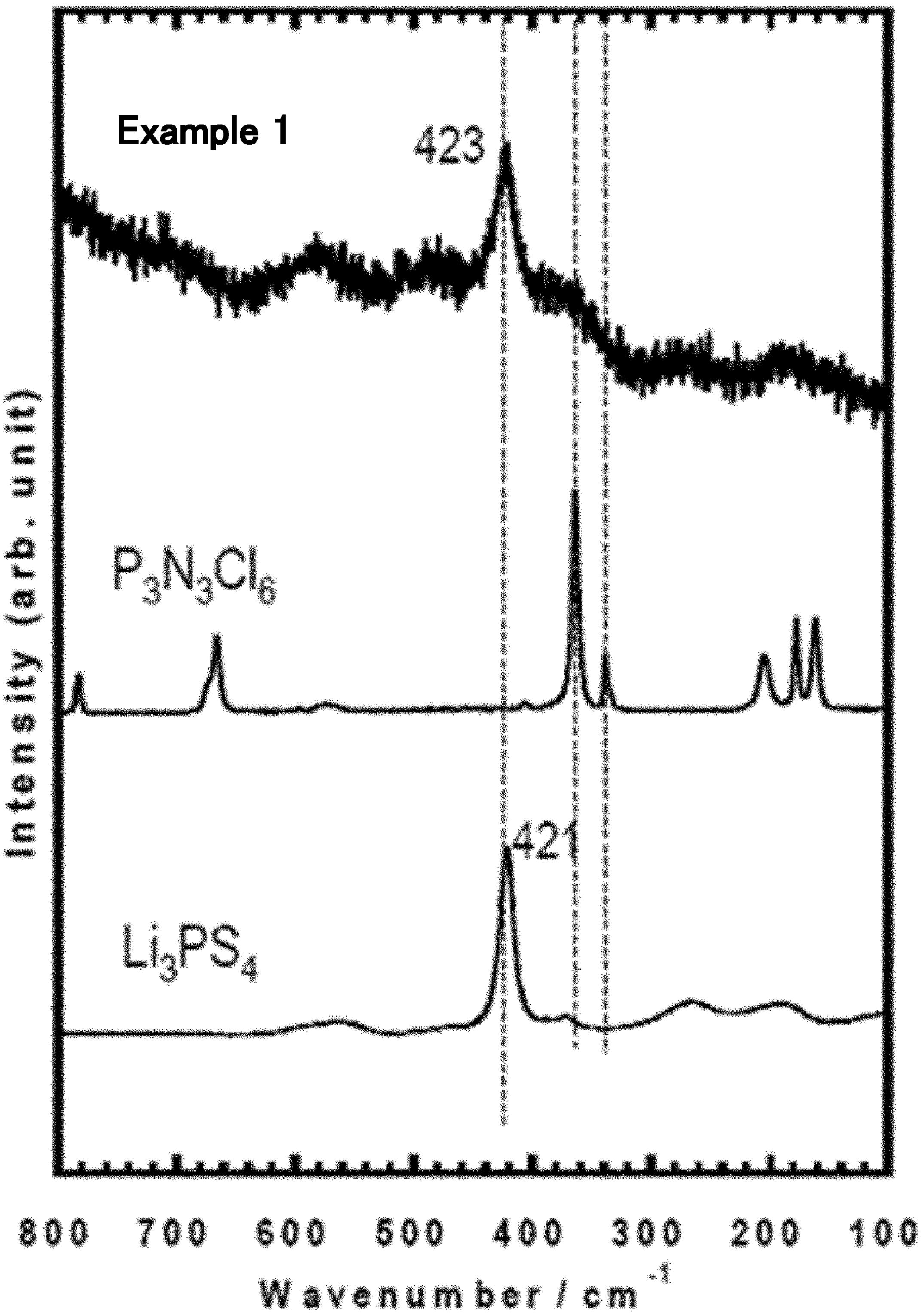
Example 1
423
P3N3Cl6
421
Li3PS4
Intensity (arb. unit)
800
700
600
500
400
300
200
100
Wavenumber / cm-1

**Description**

Technical Field

The present invention relates to a compound, a composition, a solid electrolyte material, a sheet for a battery, a battery and a method for producing a compound.

Specifically, the present invention relates to a compound and a composition which are flexible and usable as a solid electrolyte, a solid electrolyte material, a sheet for a battery, a battery and a method for producing a compound.

Background Art

As an electrode layer of an all-solid-state battery, a sulfide solid electrolyte such as $Li_3PS_4$ glass is in use (Patent Document 1).

In addition, attempts have been made to utilize a cyclic phosphazene containing a sulfur atom as a cathode material of a lithium-ion battery (Non-Patent Document 1).

Related Art Documents

Patent Documents

[Patent Document 1] JP 5757284 B2

Non-Patent Documents

[Non-Patent Document 1] G.-X. Xu et al., "Inorganic polymer phosphazene disulfide as cathode material for rechargeable lithium batteries", Solid State Ionics 177 (2006) 305-309

Summary of Invention

In conventional techniques including Patent Document 1, since sulfide solid electrolytes are poorly flexible, there is room for further improvement from the viewpoint of improving the mixing property (interfacial bondability) between a sulfide solid electrolyte and an active material and from the viewpoint of improving the followability to volume expansion and contraction resulting from the charge and discharge of batteries.

An object of the present invention is to provide a compound and a composition which are flexible and usable as a solid electrolyte, a solid electrolyte material, a sheet for a battery, a battery and a method for producing a compound.

As a result of intensive studies, the present inventors have found that a specific compound is flexible and usable as a solid electrolyte and have completed the present invention.

According to the present invention, it is possible to provide the following compound and the like.

1. A compound comprising a repeating unit represented by the following formula (1) as an acyclic structure:

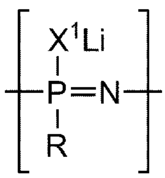

(1)

wherein in the formula (1), $X^1$ is a chalcogen atom; and R is a hydrogen atom or a substituent.

2. The compound according to 1, wherein the repeating unit is represented by the following formula (2):

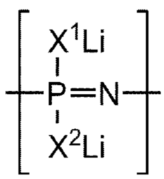

(2)

wherein in the formula (2), $X^1$ and $X^2$ are independently a chalcogen atom.

3. The compound according to 2, wherein $X^1$ is S (sulfur atom) or O (oxygen atom), and $X^2$ is S (sulfur atom) or O (oxygen atom).

4. The compound according to any one of 1 to 3, which is a reactant of phosphazene and a raw material compound containing Li (lithium atom) and a chalcogen atom.

5. The compound according to any one of 1 to 4, wherein no peak is shown in a region from 100°C to 500°C in differential thermal analysis.

6. A composition comprising the compound according to any one of 1 to 5.

7. The composition according to 6, which comprises a halogen-containing compound.

8. The composition according to 7, which comprises a lithium halide as the halogen-containing compound.

9. The composition according to 7 or 8, which comprises one or more selected from the group consisting of lithium iodide, lithium bromide and lithium chloride as the halogen-containing compound.

10. The composition according to any one of 7 to 9, wherein the halogen-containing compound comprises a halogen derived from phosphazene which is a raw material compound.

11. The composition according to any one of 6 to 10, which comprises a compound having a disulfide bond.

12. The composition according to any one of 6 to 11, which comprises a solid electrolyte other than the compound comprising the repeating unit represented by the formula (1) as the acyclic structure.

13. A solid electrolyte material comprising the compound according to any one of 1 to 5 or the composition according to any one of 6 to 12.

14. A sheet for a battery or a battery comprising the solid electrolyte material according to 13.

15. A method for producing a compound comprising a repeating unit represented by the following formula (1) as an acyclic structure, comprising:

reacting phosphazene and a raw material compound containing Li (lithium atom) and a chalcogen atom:

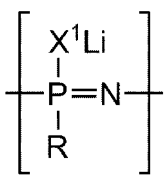

(1)

wherein in the formula (1), $X^1$ is a chalcogen atom; and R is a hydrogen atom or a substituent.

16. The method according to 15, wherein the repeating unit is represented by the following formula (2):

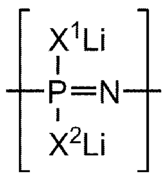

(2)

wherein in the formula (2), $X^1$ and $X^2$ are independently a chalcogen atom.

17. The method according to 15 or 16, wherein the phosphazene comprises cyclic phosphazene.

18. The method according to any one of 15 to 17, wherein the phosphazene comprises acyclic phosphazene.

19. The method according to 18, wherein the acyclic phosphazene is a phosphazene polymer.

20. The method according to any one of 15 to 19, wherein the phosphazene comprises a halogen atom.

21. The method according to any one of 15 to 20, wherein the phosphazene comprises a repeating unit represented by the following formula (3).

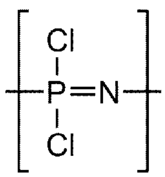

(3)

22. The method according to any one of 15 to 21, wherein the raw material compound is represented by $Li_2X^3$ (wherein $X^3$ is a chalcogen atom).

23. The method according to any one of 15 to 22, wherein the raw material compound comprises one or more selected from the group consisting of $Li_2S$ and $Li_2O$.
24. The method according to any one of 15 to 23, wherein the phosphazene and the raw material compound are reacted with one or more selected from the group consisting of physical energy, thermal energy and chemical energy.
25. The method according to any one of 15 to 23, wherein the phosphazene and the raw material compound are reacted by a mechanical milling method.
26. The method according to any one of 15 to 23, wherein the phosphazene and the raw material compound are reacted in a solvent.
27. The method according to any one of 15 to 26, wherein the phosphazene and the raw material compound are reacted at a temperature of -15 to 250°C.
28. The method according to any one of 15 to 27, wherein after the phosphazene and the raw material compound are reacted, lithium halide is further added thereto and mixed therewith under heating.

According to the present invention, there are provided a compound and a composition which are flexible and usable as a solid electrolyte, a solid electrolyte material, a sheet for a battery, a battery and a method for producing a compound. This makes it possible to improve the mixing property (interfacial bondability) between a sulfide solid electrolyte and an active material and makes it possible to improve the followability to volume expansion and contraction resulting from the charge and discharge of batteries.

Brief Description of Drawings

Fig. 1 is a view showing a result of Raman spectroscopy (Example 1).
Fig. 2 is a view showing results of Raman spectroscopy (Examples 1 and 2).
Fig. 3 is a view showing a result of Raman spectroscopy (Example 4).
Fig. 4 is a view showing a result of Raman spectroscopy (Example 5).
Fig. 5 is a view showing a result of Raman spectroscopy (Example 6).
Fig. 6 is a view showing a result of powder X-ray diffraction (XRD) (Example 1).
Fig. 7 is a view showing results of powder X-ray diffraction (XRD) (Examples 1 and 2).
Fig. 8 is a view showing results of powder X-ray diffraction (XRD) (Examples 1 and 3).
Fig. 9 is a view showing a result of powder X-ray diffraction (XRD) (Example 4).
Fig. 10 is a view showing a result of powder X-ray diffraction (XRD) (Example 5).
Fig. 11 is a view showing a result of powder X-ray diffraction (XRD) (Example 6).
Fig. 12 is a view showing results of differential thermal analysis (DTA) (Examples 1, 2, 4, and 6 and Comparative Example 1).
Fig. 13 is a view showing first derivative (DDTA) of DTA curves (Examples 1, 2, 4 and 6, and Comparative Example 1).
Fig. 14 is a view showing results of solid $^{31}P$-NMR (Examples 1 and 2).
Fig. 15 is a view showing results of solid $^{31}P$-NMR (Examples 1 and 2).
Fig. 16 is a view showing results of consolidation tests (Example 2 and Comparative Example 1).
Fig. 17 is scanning electron microscopic images of pellet cut surfaces (Example 2 and Comparative Example 1).
Fig. 18 is a view showing initial charge/discharge curves (Examples 2 and 5).
Fig. 19 is a view showing results (Cole-Cole plots) of AC impedance measurement (Examples 2 and 5).

Description of Embodiments

Hereinafter, a compound, a composition, a solid electrolyte material, a sheet for a battery, a battery and a method for producing a compound of the present invention will be described in detail.
In the present specification, "x to y" represents a numerical range of "x or more and y or less". Upper limit values and lower limit values described regarding numerical ranges can be arbitrarily combined together.

1. Compound

A compound according to an aspect of the present invention (hereinafter also referred to as "compound $\alpha$") indudes a repeating unit represented by the following formula (1) as an acyclic structure.

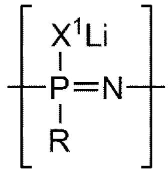

(1)

In the formula (1), $X^1$ is a chalcogen atom. In addition, R is a hydrogen atom or a substituent.

According to the compound α of the present aspect, it is possible to obtain an effect of being flexible and usable as a solid electrolyte. This makes it possible to obtain an effect of improving the mixing property (interfacial bondability) between a solid electrolyte and an active material and of improving the followability to volume expansion and contraction resulting from the charge and discharge of batteries.

In particular, since the compound α includes the repeating unit represented by the formula (1) not as a cyclic structure but as an acyclic structure, the mobility of a -P=N- chain that is composed of the repeating unit represented by the formula (1) is suitably exhibited, whereby excellent flexibility is exhibited. In addition, the compound α contains a Li atom as a part of the chemical structure and thus can be suitably used as a solid electrolyte.

In one embodiment, $X^1$ is S (sulfur atom) or O (oxygen atom).

In one embodiment, R is a substituent.

In one embodiment, the substituent is a halogen atom or a polyether chain. The halogen atom is not particularly limited, and it may be, for example, F (fluorine atom), Cl (chlorine atom), Br (bromine atom), I (iodine atom), or the like. The polyether chain can be represented by $(-OCH_2CH_2-)_nH$. n is not particularly limited, and it may be, for example, an integer of 1 to 10. In addition, the substituent R may be an alkoxide group such as $-OCH_3$, $-OCH_2CH_3$, $-OC_6H_5$ and $-OCH_2CF_3$, or an amide group such as $-NHCH_3$ and $-NHC_6H_5$.

In one embodiment, in the compound α, R in the formula (1) is represented by $-X^2Li$. $X^2$ is a chalcogen atom. In this case, the repeating unit represented by the formula (1) can be represented by the following formula (2). This makes it possible to further add a Li atom (Li ion) to the compound α and makes the compound α more suitable as the solid electrolyte.

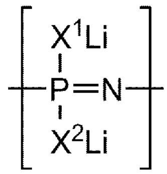

(2)

In one embodiment, $X^1$ is S (sulfur atom) or O (oxygen atom), and $X^2$ is S (sulfur atom) or O (oxygen atom).

In one embodiment, $X^1$ is S (sulfur atom), and $X^2$ is S (sulfur atom).

In one embodiment, $X^1$ is O (oxygen atom), and $X^2$ is O (oxygen atom).

Terminal structures of the compound α (a group bonded to a P atom of the repeating unit represented by the formula (1) disposed at one end of the compound α, and a group bonded to a N atom of the repeating unit represented by the formula (1) disposed at the other end) are not particularly limited, and examples thereof include halogen atoms, -SLi, -OLi, and the like. Examples of the halogen atoms include Cl (chlorine atom) and the like.

In one embodiment, the compound α has a peak A at 62.4 ± 2.0 ppm and a peak B at 32.0 ± 2.0 ppm in solid $^{31}P$-NMR.

In one embodiment, the compound α has a peak C at 89.5 ± 2.0 ppm and a peak D at -4.2 ± 2.0 ppm in solid $^{31}P$-NMR.

In one embodiment, the compound α is a reactant of phosphazene and a raw material compound containing Li (lithium atom) and a chalcogen atom. Regarding this embodiment, the description of a method for producing the compound α below is incorporated.

In one embodiment, the compound α shows no peak in a region from 100°C to 500°C in differential thermal analysis. The differential thermal analysis is performed by a method to be described in Examples.

2. Composition

A composition according to an aspect of the present invention includes the compound α according to an aspect of the present invention.

According to the composition of the present aspect, since the composition includes the compound α, it is possible to obtain an effect of being flexible and usable as a solid electrolyte.

Components other than the compound α that are included in the composition are not particularly limited.
In one embodiment, the composition indudes a halogen-containing compound.
In one embodiment, the composition indudes a lithium halide as the halogen-containing compound.
In one embodiment, the composition indudes one or more selected from the group consisting of lithium iodide, lithium bromide and lithium chloride as the halogen-containing compound.
In one embodiment, the halogen-containing compound that is included in the composition contains a halogen derived from phosphazene that is a raw material compound.
In one embodiment, the composition indudes a compound having a disulfide bond (hereinafter also referred to as "compound β"). The compound β is capable of suitably functioning as a binder.
Examples of the compound β include compounds that contain a phosphorus atom and a sulfur atom as constituent atoms and have a disulfide bond. In such compounds, the disulfide bond is capable of bonding two phosphorus atoms.
In one embodiment, the compound β includes one or more structures selected from the group consisting of structures (repeating units) represented by the following formulas (β1) to (β6).
The compound β preferably indudes one or more structures selected from the group consisting of the structures (repeating units) represented by the following formulas (β1) to (β2).

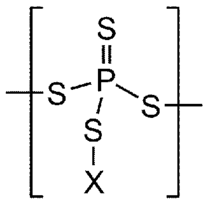
(β 1)

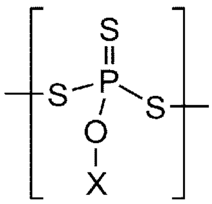
(β 2)

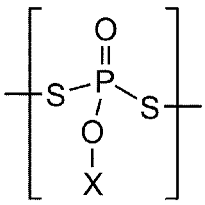
(β 3)

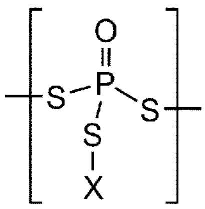
(β 4)

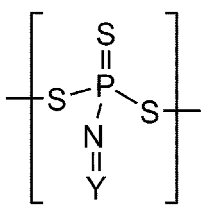
(β 5)

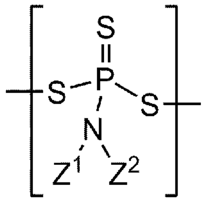

(β 6)

In the formulas (β1) to (β4), X is an arbitrary group and is, for example, a metal atom (for example, Li, Na, Mg, Al, or the like). In the formula (β5), Y is an arbitrary group and is, for example, $=PS_2$. In the formula (β6), $Z^1$ and $Z^2$ are independently an arbitrary group, they may be the same as or different from each other, and they are, for example, $-PS_3$.

The compound β can be produced by adding an oxidizing agent to a raw material compound containing a phosphorus atom and a sulfur atom as constituent atoms (altematively, a raw material compound containing a phosphorus atom, a sulfur atom, and one or more elements selected from the group consisting of an oxygen atom, a nitrogen atom and a halogen atom as constituent atoms), and reacting the raw material compound and the oxidizing agent.

As the raw material compound, for example, a compound containing a $PS_4$ structure (for example, $Li_3PS_4$ or the like) or a compound containing a $PS_xO_y$ structure (wherein $1 \leq x$ and $0 < y$) (for example, $Li_3PS_3O$ or the like) can be used.

As the oxidizing agent, for example, a pure halogen (for example, $I_2$ or $Br_2$) can be used.

The reaction between the raw material compound and the oxidizing agent can be advanced by, for example, a mechanical milling method. As the mechanical milling method, it is possible to use a method that will be described regarding a method for producing the compound α.

In one embodiment, the composition indudes a solid electrolyte other than the compound α (the compound including the repeating unit represented by the formula (1) as an acydic structure).

As such a solid electrolyte, a known solid electrolyte can be used with no particular limitation.

As such a solid electrolyte, for example, an oxide solid electrolyte and a sulfide solid electrolyte can be used. Between them, a sulfide solid electrolyte is preferable, and specific examples thereof include sulfide solid electrolytes having a crystal structure such as an argyrodite type crystal structure, a $Li_3PS_4$ crystal structure, a $Li_4P_2S_6$ crystal structure, a $Li_7P_3S_{11}$ crystal structure, a $Li_{4-x}Ge_{1-x}P_xS_4$-based thio-LISICON Region II type crystal structure, and a crystal structure similar to the $Li_{4-x}Ge_{1-x}P_xS_4$-based thio-LISICON Region II type (hereinafter abbreviated as RII type crystal structure in some cases).

In one embodiment, the composition indudes 1% by mass or more, 5% by mass or more, 10% by mass or more, 20% by mass or more, 30% by mass or more, 40% by mass or more, 50% by mass or more, 60% by mass or more, 70% by mass or more, 80% by mass or more, 90% by mass or more, 95% by mass or more, 97% by mass or more, 99% by mass or more, 99.5% by mass or more, or substantially 100% by mass of the compound α. In the case of including 100% by mass of the compound α, the composition may contain an inevitable impurity.

In one embodiment, the amount of the halogen-containing compound in the composition is 0 to 99% by mass. In addition, in one embodiment, the amount of the halogen-containing compound in the composition is one or more ranges selected from the group consisting of 0 to 50% by mass, 50 to 80% by mass, 80 to 90% by mass and 90 to 99% by mass.

In one embodiment, the amount of the compound having a disulfide bond (compound β) in the composition is 0 to 99.9% by mass. In addition, in one embodiment, the amount of the compound having a disulfide bond (compound β) in the composition is one or more ranges selected from the group consisting of 0 to 10% by mass, 10 to 20% by mass, 20 to 30% by mass, 30 to 40% by mass, 40 to 50% by mass, 50 to 60% by mass, 70 to 80% by mass, 80 to 90% by mass, 90 to 99% by mass, and 99 to 99.9% by mass.

In one embodiment, the amount of the solid electrolyte other than the compound α in the composition is 0 to 99.9% by mass. In addition, in one embodiment, the amount of the solid electrolyte other than the compound α in the composition is one or more ranges selected from the group consisting of 0 to 10% by mass, 10 to 20% by mass, 20 to 30% by mass, 30 to 40% by mass, 40 to 50% by mass, 50 to 60% by mass, 70 to 80% by mass, 80 to 90% by mass, 90 to 99% by mass, and 99 to 99.9% by mass.

The composition can be used for, for example, an electrode mixture layer for a battery (a positive electrode, a negative electrode, or the like) or an electrolyte layer for a battery.

The composition that is used for the positive electrode may further include a positive electrode active material. The positive electrode active material is a substance capable of intercalating and deintercalating lithium ions, and active materials known as positive electrode active materials in the battery field can be used.

Examples of the positive electrode active material include metal oxides, sulfides, and the like. The sulfides include metal sulfides and non-metal sulfides.

The metal oxides are, for example, transition metal oxides. Specific examples thereof include $V_2O_5$, $V_6O_{13}$, $LiCoO_2$, $LiNiO_2$, $LiMnO_2$, $LiMn_2O_4$, $Li(Ni_aCo_bMn_c)O_2$ (wherein $0 < a < 1$, $0 < b < 1$, $0 < c < 1$, $a + b + c = 1$), $LiNi_{1-Y}Co_YO_2$, $LiCo_{1-Y}Mn_YO_2$, $LiNi_{1-Y}Mn_YO_2$ (wherein $0 \leq Y < 1$), $Li(Ni_aCo_bMn_c)O_4$ ($0 < a < 2$, $0 < b < 2$, $0 < c < 2$, $a + b + c = 2$), $LiMn_{2-}$

$_{Z}Ni_{Z}O_4$, $LiMn_{2-Z}Co_{Z}O_4$ (wherein $0 < Z < 2$), $LiCoPO_4$, $LiFePO_4$, CuO, $Li(Ni_aCo_bAl_c)O_2$ (wherein $0 < a < 1$, $0 < b < 1$, $0 < c < 1$, $a + b + c = 1$), and the like.

Examples of the metal sulfides include titanium sulfide ($TiS_2$), molybdenum sulfide ($MoS_2$), iron sulfide (FeS, $FeS_2$), copper sulfide (CuS), nickel sulfide ($Ni_3S_2$), and the like.

Additionally, examples of the metal oxides include bismuth oxide ($Bi_2O_3$), bismuth lead oxide ($Bi_2Pb_2O_5$), and the like.

Examples of the non-metal sulfides include organic disulfide compounds, carbon sulfide compounds, and the like.

Additionally, niobium selenide ($NbSe_3$), metallic indium, and sulfur can also be used as the positive electrode active material.

In one embodiment, the amount of the positive electrode active material in the composition that is used for a positive electrode is 30 to 99% by mass.

The composition that is used for the negative electrode may further include a negative electrode active material.

As the negative electrode active material, it is possible to use materials that are normally used for lithium-ion secondary batteries, such as metallic lithium, carbon materials such as graphite, natural graphite, artificial graphite, hard carbon and soft carbon; polyacene-based conductive polymers, composite metal oxides such as lithium titanate; silicon, silicon alloys, silicon composite oxides, compounds that form an alloy with lithium such as tin and a tin alloy. Among these, the negative electrode active material preferably contains one or more selected from the group consisting of Si (silicon, silicon alloys, silicon-graphite composites, silicon composite oxides, and the like) and Sn (tin and tin alloys).

In one embodiment, the amount of the negative electrode active material in the composition that is used for a negative electrode is 30 to 99% by mass. The composition that is used for the negative electrode does not need to include the compound $\alpha$ at all times (for example, a case where the composition that is used for the positive electrode indudes the compound $\alpha$, or the like), and the amount of the negative electrode active material in the composition that is used for the negative electrode may be 30 to 100% by mass.

The composition that is used for the positive electrode or the negative electrode may further include a conductive auxiliary agent. In a case where the active material is poorly electron-conductive, the conductive auxiliary agent is preferably added thereto.

As specific examples of the conductive auxiliary agent, substances containing at least one element selected from the group consisting of a carbon material, nickel, copper, aluminum, indium, silver, cobalt, magnesium, lithium, chromium, gold, ruthenium, platinum, beryllium, iridium, molybdenum, niobium, osmium, rhodium, tungsten and zinc are preferable, and highly conductive pure carbon, carbon materials other than the pure carbon; pure metals, mixtures or compounds containing nickel, copper, silver, cobalt, magnesium, lithium, ruthenium, gold, platinum, niobium, osmium or rhodium are more preferable.

Specific examples of the carbon materials include carbon black such as Ketjenblack, acetylene black, DENKA BLACK, thermal black and channel black; graphite, carbon fibers, activated carbon, and the like. These can be used alone, or two or more thereof can be used in combination. Among these, acetylene black including highly electron-conductive DENKA BLACK, and Ketjenblack are suitable.

In one embodiment, the amount of the conductive auxiliary agent in the composition that is used for the positive electrode or the negative electrode is 0 to 50% by mass.

3. Solid electrolyte material

A solid electrolyte material according to an aspect of the present invention indudes the compound $\alpha$ according to an aspect of the present invention or the composition according to an aspect of the present invention.

According to the solid electrolyte material of the present aspect, since the compound $\alpha$ is included, an effect of excellent flexibility can be obtained.

In one embodiment, the solid electrolyte material is composed of the compound $\alpha$ according to an aspect of the present invention or the composition according to an aspect of the present invention.

4. Sheet for battery, and battery

A sheet for a battery or a battery according to an aspect of the present invention includes the solid electrolyte material according to an aspect of the present invention.

According to the sheet for a battery or battery of the present aspect, since the solid electrolyte material has excellent flexibility, it is possible to obtain an effect of improving the mixing property (interfacial bondability) between a solid electrolyte and an active material and of improving the followability to volume expansion and contraction resulting from the charge and discharge of batteries.

A method for forming a sheet of the solid electrolyte material (the sheet for a battery) is not particularly limited, and

examples thereof include a coating method and the like. In the coating method, it is possible to use a coating liquid in which the solid electrolyte material is dissolved or dispersed in a solvent. As the solvent that is included in the coating liquid, it is possible to use a chain, cyclic or aromatic ether (for example, dimethyl ether, dibutyl ether, tetrahydrofuran, anisole, or the like), an ester (for example, ethyl acetate, ethyl propionate, or the like), an alcohol (for example, methanol, ethanol, or the like), an amine (for example, tributylamine or the like), an amide (for example, N-methylformamide or the like), a lactam (for example, N-methyl -2 pyrrolidone or the like), hydrazine, acetonitrile, and the like. After the application, the solvent is dried to form a sheet (dried coating film). A drying method is not particularly limited, and it is possible to use, for example, one or more means selected from the group consisting of heat drying, air blow drying, and reduced pressure drying (including vacuum drying).

A member to which the coating liquid is applied is not particularly limited. The formed sheet may be used for a battery together with the member or the formed sheet may be peeled off from the member and used for a battery. In one embodiment, the coating liquid for forming a positive electrode sheet is applied onto a positive electrode current collector. In one embodiment, the coating liquid for forming a negative electrode sheet is applied onto a negative electrode current collector. In one embodiment, the coating liquid for forming an electrolyte layer (sheet) is applied onto the positive electrode or the negative electrode. In one embodiment, the coating liquid for forming the electrolyte layer is applied onto an easily peelable member, and a formed layer is then peeled off from the easily peelable member and disposed between the positive electrode and the negative electrode.

The dried coating film (sheet) is preferably pressed. During the pressing, the sheet needs to be pressed and compressed. For example, the sheet can be pressed to reduce the porosity. A pressing machine is not particularly limited, and for example, a roll press, a uniaxial press, or the like can be used. The temperature during the pressing is not particularly limited, and it may be about room temperature (23°C) or a temperature that is lower or higher than room temperature.

In one embodiment, the battery is an all-solid-state battery.

In one embodiment, the all-solid-state battery indudes a laminate including a positive electrode current collector, a positive electrode, an electrolyte layer, a negative electrode, and a negative electrode current collector in this order. As the current collector, it is possible to use a plate-like body, a foil-like body, and the like made of copper, magnesium, stainless steel, titanium, iron, cobalt, nickel, zinc, aluminum, germanium, indium, lithium, an alloy thereof, or the like.

In the battery, one or more selected from the group consisting of the positive electrode, the electrolyte layer, and the negative electrode preferably include the compound $\alpha$.

In the above description (and Examples to be described below), a case where the compound $\alpha$, the composition, and the solid electrolyte material are used in the battery has been mainly described, but the present invention is not limited thereto. The compound $\alpha$, the composition, and the solid electrolyte material have ion conductivity and excellent flexibility and thus can be widely applied to various applications.

5. Method for producing compound

A method for producing a compound according to an aspect of the present invention is a method for producing a compound including a repeating unit represented by the following formula (1) as an acyclic structure (the compound $\alpha$), and it includes: reacting phosphazene and a raw material compound containing Li (lithium atom) and a chalcogen atom.

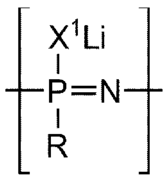

(1)

In the formula (1), $X^1$ is a chalcogen atom. In addition, R is a hydrogen atom or a substituent.

According to the present aspect, it is possible to obtain an effect of enabling the production of the compound $\alpha$ that is flexible and usable as a solid electrolyte.

In the present embodiment, regarding the compound $\alpha$, the description of the compound according to an aspect of the present invention is incorporated.

In one embodiment, the phosphazene includes cyclic phosphazene.

In one embodiment, the cydic phosphazene indudes cyclotriphosphazene.

In one embodiment, the cydic phosphazene indudes hexachlorocydotriphosphazene.

In the case of using cyclic phosphazene as the phosphazene, the cyclic phosphazene is preferably ring-opened during the reaction with the raw material compound. A method for ring-opening the cydic phosphazene is not particularly limited, and it is possible to suitably advance ring-opening by ring-opening polymerization by heating (a catalyst may be

added), living cationic polymerization using N-(trimethylsilyl)-trichlorophosphorane imine ($Cl_3PNSi(CH_3)_3$), or the like.

In one embodiment, the phosphazene includes acyclic phosphazene.

In one embodiment, the acydic phosphazene includes a phosphazene polymer.

The molecular weight of the phosphazene polymer may be, for example, 300 or more. The upper limit is not particularly limited, and it is, for example, 1,000,000 or less.

The phosphazene polymer can be obtained by, for example, polymerizing phosphazene. For example, the phosphazene polymer can be obtained by heating cyclic phosphazene such as hexachlorocydotriphosphazene. As the heating conditions, for example, the heating temperature is 250 to 350°C, and the heating time is 1 to 30 hours.

In one embodiment, the phosphazene contains a halogen atom.

Examples of the halogen atom include an iodine atom, a bromine atom, a chlorine atom, and the like. The phosphazene containing a halogen atom may be halogenophosphazene containing one or more selected from these halogen atoms.

In one embodiment, the phosphazene includes a repeating unit represented by the following formula (3). Such phosphazene (chlorophosphazene) may be, for example, hexachlorocydotriphosphazenes.

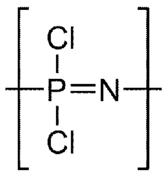

(3)

In one embodiment, the raw material compound is represented by $Li_2X^3$ (wherein $X^3$ is a chalcogen atom).

In one embodiment, the raw material compound includes one or more selected from the group consisting of $Li_2S$ and $Li_2O$.

In one embodiment, the phosphazene and the raw material compound are reacted with one or more selected from the group consisting of physical energy, thermal energy and chemical energy.

The physical energy can be supplied using, for example, a mechanical milling (mechanochemical) method. That is, in one embodiment, the phosphazene and the raw material compound are reacted by the mechanical milling method. In the mechanical milling method, for example, a planetary ball mill or the like can be used.

In the mechanical milling method in which a planetary ball mill or the like is used, the treatment conditions are not particularly limited, and for example, the rotation speed may be 100 to 1,000 rpm, the treatment time may be 1 to 100 hours, and the ball diameter may be 1 to 10 mm.

In one embodiment, the phosphazene and the raw material compound are reacted in a solvent.

Examples of the solvent (dispersion medium) include aprotic liquids and the like. The aprotic liquids are not particularly limited, and examples thereof include chain or cyclic alkanes preferably having 5 or more carbon atoms such as n-heptane, aromatic hydrocarbons such as benzene, toluene, xylene and anisole, chain or cydic ethers such as dimethyl ether, dibutyl ether and tetrahydrofuran, alkyl halides such as chloroform and methylene chloride, esters such as ethyl acetate and ethyl propionate, alcohols such as methanol and ethanol, amines such as tributylamine, amides such as N-methylformamide, lactams such as N-methyl-2-pyrrolidone, hydrazine, acetonitrile, and the like.

Even in the solvent, the phosphazene and the raw material compound can be reacted with one or more energies selected from the group consisting of physical energy such as stirring, milling and ultrasonic vibration, thermal energy and chemical energy.

In one embodiment, the phosphazene and the raw material compound are reacted at a temperature of -15 to 250°C. For example, in the case of being reacted in the solvent, the phosphazene and the raw material compound are preferably reacted at such a temperature.

In one embodiment, the compound $\alpha$ that is obtained forms the composition according to an aspect of the present invention together with a halogen-containing compound that is generated as a by-product along with the production of the compound $\alpha$ (including a halogen derived from the phosphazene which is the raw material compound).

In one embodiment, after the phosphazene and the raw material compound are reacted, lithium halide is further added thereto and mixed therewith under heating. As the lithium halide, it is possible to use one or more selected from the group consisting of lithium iodide, lithium bromide and lithium chloride. This makes it possible to obtain the composition according to an aspect of the present invention including the compound $\alpha$ and the lithium halide. The lithium halide additionally added as described above is capable of contributing to improvement in ionic conductivity and the like.

## Examples

Hereinafter, Examples of the present invention will be described, but the present invention is not limited to these

Examples.

1. Production of compound

(Example 1)

$Li_2S$ (manufactured by Furuuchi Chemical Corporation, 3N powder 200 Mesh) and hexachlorocyclotriphosphazene ($P_3N_3Cl_6$, manufactured by Tokyo Chemical Industry Co., Ltd.) were mixed together in a molar ratio of $Li_2S:P_3N_3Cl_6$ = 6:1 and reacted under the following conditions by mechanical milling. Next, a dispersion medium was removed by drying to obtain a compound (amorphous).

[Conditions of mechanical milling]

Planetary ball mill: Manufactured by Fritsch Japan Co., Ltd., premium line PL-7
Sample mass: 2 g
Form: Wet milling (dispersion medium: 10 mL of n-heptane)
Ball: Material $ZrO_2$, diameter 5 mm, total mass 106 g
Pot: Material $ZrO_2$, capacity 80 mL
Rotation: 500 rpm
Treatment time: 30 hours

(Example 2)

The compound obtained in Example 1 was subjected to the following refinement treatment and then to the following LiCl removal treatment to obtain a compound (amorphous).

[Conditions of refinement treatment]

The refinement treatment was performed on the obtained compound with a planetary ball mill (the same device as described above), and the LiCl removal treatment was then performed by the following procedure.

Sample mass: 2 g
Form: Wet milling (n-heptane: 26 mL, dibutyl ether: 0.5 mL)
Ball: Material $ZrO_2$, diameter 1 mm, total mass 80 g
Pot: Material $ZrO_2$, capacity 80 mL
Rotation: 200 rpm
Treatment time: 20 hours

[Procedure of LiCl removal treatment]

a. 1 g of the compound is collected in a vial bottle, and 10 mL of tetrahydrofuran (THF) (manufactured by FUJIFILM Wako Pure Chemical Corporation, super dehydrated) is added thereto, and the components are stirred and left to stand.
b. After a supernatant is removed, 10 mL of THF is added again to a solid content (precipitate), and the solid content is stirred and left to stand.
c. The operation b is repeated once.
d. After a supernatant is removed, the solid content (precipitate) is dried at 60°C for 10 hours to obtain a THF-treated compound.

(Example 3)

$Li_2S$ (manufactured by Furuuchi Chemical Corporation, 3N powder 200 Mesh) and $P_3N_3Cl_6$ (manufactured by Tokyo Chemical Industry Co., Ltd.) were added to THF in a molar ratio of $Li_2S:P_3N_3Cl_6$ = 6:1 and reacted while being stirred at 25°C for 24 hours (liquid phase synthesis). Next, THF was removed by drying to obtain a compound (amorphous).

(Example 4)

$Li_2O$ (manufactured by Japan Pure Chemical Co., Ltd., 2Nup powder), and $P_3N_3Cl_6$ (manufactured by Tokyo Chemical Industry Co., Ltd.) were mixed together in a molar ratio of $Li_2O$:$P_3N_3Cl_6$ = 6:1 and reacted under the following conditions by mechanical milling. Next, a dispersion medium was removed by drying to obtain a compound (amorphous).

[Conditions of mechanical milling]

Planetary ball mill: Manufactured by Fritsch Japan Co., Ltd., premium line PL-7
Sample mass: 1 g
Form: Wet milling (dispersion medium: 3 mL of n-heptane)
Ball: Material $ZrO_2$, diameter 5 mm, total mass 53 g
Pot: Material $ZrO_2$, capacity 45 mL
Rotation: 370 rpm
Treatment time: 60 hours

(Example 5)

The compound obtained in Example 2 and LiI (manufactured by Japan Pure Chemical Co., Ltd., 3Nup powder anhydrous) were mixed together in a molar ratio of compound:LiI = 1:1 (the number of moles of the compound was converted with a repeating unit ($X^1$, $X^2$ = S) represented by a formula (1)) and reacted under the following conditions by mechanical milling. Next, a dispersion medium was removed by drying to obtain a compound (amorphous).

[Conditions of mechanical milling]

Planetary ball mill: Manufactured by Fritsch Japan Co., Ltd., premium line PL-7
Sample mass: 1 g
Form: Wet milling (dispersion medium: 3 mL of n-heptane)
Ball: Material $ZrO_2$, diameter 5 mm, total mass 53 g
Pot: Material $ZrO_2$, capacity 45 mL
Rotation: 500 rpm
Treatment time: 20 hours

(Example 6)

A polymerization reaction of $P_3N_3Cl_6$ (manufactured by Tokyo Chemical Industry Co., Ltd.) was performed at 275°C for 15 hours. The obtained intermediate was dissolved in toluene and dried in a vacuum at 80°C for two hours to obtain a phosphazene polymer. In a molar ratio of $Li_2S$ : phosphazene polymer = 6 : 1, they were mixed, and they were reacted by mechanical milling in the same manner as in Example 5 (except that the treatment time was set to 65 hours). Next, a dispersion medium was removed by drying to obtain a compound (amorphous).

(Comparative Example 1)

$Li_2S$ (manufactured by Furuuchi Chemical Corporation, 3N powder 200 Mesh) and $P_2S_5$ (manufactured by Merck & Co., Inc.) were mixed together in a molar ratio of $Li_2S$:$P_2S_5$ = 3:1, and they were reacted by the same mechanical milling as in Example 1 under the following conditions. Next, a dispersion medium was removed by drying to obtain a compound (glass powder, $Li_3PS_4$).

[Conditions of mechanical milling]

Planetary ball mill: Manufactured by Fritsch Japan Co., Ltd., premium line PL-7
Sample mass: 3.6 g

Form: Wet milling (dispersion medium: 11.7 mL of n-heptane)
Ball: Material $ZrO_2$, diameter 5 mm, total mass 106 g
Pot: Material $ZrO_2$, capacity 80 mL
Rotation: 500 rpm
Treatment time: 20 hours

Evaluation

(1) Raman spectroscopy

Micro Raman spectroscopy was performed on the compounds obtained in Examples 1, 2 and 4 to 6, the compound obtained in Comparative Example 1, and hexachlorocyclotriphosphazene ($P_3N_3Cl_6$) using a laser Raman spectrophotometer (manufactured by Horiba, Ltd., LabRAM HR Evolution LabSpec 6).

Raman spectra obtained by micro Raman spectroscopy are shown in Figs. 1 to 5. In Figs. 1 to 5, "*" means switching of a spectrometer. In addition, in Fig. 5, "PZ polymer" means the phosphazene polymer, and "cyclo-PZ" means hexachlorocyclotriphosphazene ($P_3N_3Cl_6$).

From Figs. 1 to 5, peaks around 423 $cm^{-1}$ were confirmed regarding the compounds of Examples 1, 2 and 4 to 6. In Comparative Example 1, a peak derived from a P-S bond was observed at a similar position of 421 $cm^{-1}$, and it is presumed that a P-S bond was also formed in the compounds of Examples 1, 2 and 4 to 6.

(2) Powder X-ray diffraction (XRD)

XRD was performed on the compounds obtained in Examples 1 to 6. The results are shown in Figs. 6 to 11. In the drawings, dots were imparted to peaks attributed to LiCl.

From Figs. 6 to 11, it is found that the compounds of Examples 1, 3 to 4 and 6, including the compound and LiCl which is a by-product of the reaction, are amorphous. Incidentally, it is found that in the samples on which the LiCl removal treatment had been performed in Examples 2 and 5, the peaks attributed to LiCl disappeared, and the compounds from which LiCl had been removed were obtained.

(3) Differential thermal analysis (DTA)

The compounds obtained in Examples 1, 2, 4 and 6, and Comparative Example 1 were sealed in an aluminum airtight container in an argon atmosphere, and DTA was performed at a heating rate of 10 °C/min using a differential thermobalance (manufactured by NETZSCH Analyzing & Testing, STA2500 Regulus). The results are shown in Fig. 12. In addition, a first derivative (DDTA) of a DTA curve is shown in Fig. 13.

From Fig. 12 and Fig. 13, it is found that the compounds of Examples 1, 2, 4 and 6 do not show any large changes in DDTA (corresponding to peaks in DTA) in a region from 100°C to 500°C and have high amorphous thermal stability.

(4) Ion conductivity

Each of the compounds obtained in Examples 1 to 6 and Comparative Example 1 was put into a cylindrical container, sandwiched between cylindrical SUS shafts inserted from both ends of the container, thereby press-molded at room temperature (23°C) and a pressure of 333 MPa, and processed into a disk-like powder compact.

A lead wire was connected to the powder compact while the pressed state was maintained, and the ionic conductivity was measured. In the measurement, "Solartron 1470E Cell test system" manufactured by Solartron Analytical was used.

The ionic conductivity was calculated from the thickness of the press-molded powder compact. The results are shown in Table 1.

From Table 1, it is found that the compounds obtained in Examples have high ionic conductivity.

[Table 1]

| | Ion conductivity [$\times 10^{-5}$ S/cm] |
|---|---|
| Example 1 | 3.5 |
| Example 2 | 2.4 |
| Example 4 | 0.076 |
| Example 5 | 8.1 |

(continued)

| | Ion conductivity [×$10^{-5}$ S/cm] |
|---|---|
| Example 6 | 1.2 |
| Comparative Example 1 | 49 |

(5) Solid $^{31}P$-NMR

About 60 mg of the compound (powder sample) obtained in each of Examples 1 and 2 was loaded into an NMR sample tube, and a solid $^{31}P$-NMR spectrum was obtained with the following device under the following conditions.

Device: ECZ400R device (manufactured by JEOL Ltd.)
Observation nucleus: $^{31}P$
Observation frequency: 161.944 MHz
Measurement temperature: Room temperature
Pulse sequence: Single pulse (using 90° pulse)
90° Pulse width: 3.8 μ
Waiting time until next pulse application after FID measurement: 300 s
Rotation speed of magic angle rotation: 12 kHz
Cumulated number: 16 times
Measurement range: 250 ppm to -150 ppm
Chemical shift: Obtained using $(NH_4)_2HPO_4$ (chemical shift 1.33 ppm) as an external reference.

Regarding the obtained solid $^{31}P$-NMR spectrum, a peak in a range of -100 to 200 ppm was analyzed using software "FT-NMR" (software recorded in "FT-NMR Data Processing by Personal Computer" revised edition (second edition) (Sankyo Shuppan Co., Ltd.)), and a separation peak was determined.

The software calculates the separation peak and the calculated value and residual sum of squares R2 of an NMR signal (experimental value) in the range of -100 to 200 ppm of the solid $^{31}P$-NMR spectrum from the NMR signal using a nonlinear least squares method. A case where the residual sum of squares R2 within the analysis range of the experimental value and the calculated value reached 0.007 or less when the maximum peak height was considered as 1 and the number of separation peaks was minimized was regarded as peak separation being completed. Means and path of peak fitting are not limited in particular, but attention needs to be paid to the following points.

In the analysis, basically, fitting is started with an assumption that the number of separation peaks is one. However, the analysis may be started with an assumption that the number of separation peaks is two or more in consideration of the peak shape of the measured solid $^{31}P$-NMR spectrum. For example, in a case where the peak shape of the measured value is asymmetric and has a shoulder portion or a hem portion, R2 does not reach 0.007 or less unless the number of separation peaks is set to two or more.

Fitting is started with initial values considered as appropriate input as various parameters. The parameters are the peak position (ppm), the peak height, and the peak half width (Hz). The software calculates the separation peak and the calculated value and residual sum of squares R2 of the NMR signal by the nonlinear least squares method with the initial value considered as a starting point.

For peak fitting, a Gaussian function or a Pseudo-Voigt function (linear sum of the Gaussian function and a Lorentz function) is used. The functions to be used are based on the Gaussian function, and the Pseudo-Voigt function may be selected when the accuracy is poor. At the time of fitting, calculation is performed with the ratio of the Pseudo-Voigt function to the Gaussian function and the Lorentz function fixed, but the fixed value needs to be obtained as appropriate.

The fitting is repeated until R2 reaches 0.007 or less while the parameters and the like are finely corrected. In a case where R2 does not reach 0.007 or less, the number of peaks is increased, and the analysis is then performed in the same manner. Finally, when R2 reaches 0.007 or less, peak separation is considered as being completed. While 0.007 or less is considered as the reference of R2, the value is preferably as small as possible, and the accuracy may be thus increased by further repeating the fitting.

The area rate $\varphi_n$ (%) of each separation peak obtained by the analysis was obtained from the area $S_n$ of the separation peak n and the sum $S_{all}$ thereof (= $S_1 + S_2 + ... + S_m$: m is an integer of 1 or more) by the following formula.

$$\varphi_n = 100 \times S_n/S_{all}$$

The above results are shown in Figs. 14 and 15, and Table 2.

[Table 2]

| | Example 1 | Example 2 |
|---|---|---|
| Unit | Area rate $\phi_n$[%] (ppm) | Area rate $\phi_n$[%] (ppm) |
| Peak 1 | 19.6 (89.5) | 17.2 (88.3) |
| Peak 2 | 6.2 (85.6) | 4.9 (85.7) |
| Peak 3 | 23.1 (62.4) | 23.3 (63.2) |
| Peak 4 | 30.4 (32.0) | 31.4 (32.2) |
| Peak 5 | 6.3 (4.2) | 6.4 (3.4) |
| Peak 6 | 14.4 (-4.2) | 16.8 (-2.6) |

(6) Flexibility (consolidation test)

On the compounds of Example 2 and Comparative Example 1, the following consolidation test was performed.

[Consolidation test]

100 mg of the compound was put into a molding machine (manufactured by NPa System Co., Ltd.) and pressurized at a pressure of 55 MPa, 185 MPa, or 370 MPa to press a cylindrical pellet having a diameter of 10 mm.

The density of the pellet obtained at each molding pressure was measured. The results are shown in Table 3. In addition, the plots thereof are shown in Fig. 16. Furthermore, appearances of cut surfaces (fracture surfaces) obtained by cutting the pellets with a razor blade that were observed with a scanning electron microscope are shown in Fig. 17.

[Table 3]

| | | Pellet density [g/cm$^3$] | |
|---|---|---|---|
| | | Example 2 | Comparative Example 1 |
| Molding pressure | 55MPa | 0.85 | 1.09 |
| | 185MPa | 1.18 | 1.40 |
| | 370MPa | 1.51 | 1.66 |

From Table 3 and Fig. 16, it is found that the compound of Example 2 has a pellet density highly dependent on the molding pressure and excellent flexibility as compared with the compound of Comparative Example 1. In addition, it is found from Fig. 17 that the compound of Example 2 was densified by pressing as compared with the compound of Comparative Example 1.

(7) Production of battery

<Coating of positive electrode active material with $LiNbO_3$>

200 mg of $LiCoO_2$ was weighed, and 0.3 mL of $LiNb(OEt)_6$ (manufactured by Alfa Aesar, lithium niobium ethoxide, 99+% (metal base), 5% w/v in ethanol) was added thereto. Next, 0.7 mL of super dehydrated ethanol (manufactured by FUJIFILM Wako Pure Chemical Corporation) was added thereto. The obtained sample was treated with an ultrasonic cleaner for 30 minutes and dried at 40°C for 10 hours in an Ar atmosphere. Furthermore, the sample was vacuum-dried at 100°C for an hour. The dried sample was put into a desiccator with a relative humidity of about 20% to 50%, and a hydrolysis reaction was advanced for 10 hours. Next, a heating treatment was performed on the reacted sample at 350°C for an hour to obtain $LiCoO_2$ coated with $LiNbO_3$ ($LiNbO_3$-coated LCO). The amount of $LiNbO_3$ in the obtained $LiNbO_3$-coated LCO is 3% by mass.

<Fabrication procedure of battery>

$LiNbO_3$-coated $LiCoO_2$, the compound obtained in Example 2 or 5 (solid electrolyte), and acetylene black (AB) (manufactured by Denka Company Limited) were mixed together in a mass ratio of $LiCoO_2$ : solid electrolyte : AB = 70 : 30 :

3 to obtain a mixture (total mass: 0.206 g).

A $Li_3PS_4$ solid electrolyte ($Li_3PS_4$ obtained in Comparative Example 1) (80 mg) was put into a cylindrical container with SUS shafts on both sides and compacted to form a solid electrolyte layer. Next, 10 mg of a positive electrode mixture obtained above was put into the cylindrical container so as to overlap the solid electrolyte layer, furthermore, an In foil and a Li foil were put into the cylindrical container in this order on a side opposite to an electrode sheet in the solid electrolyte layer, press-laminated, and restrained with a dedicated jig to fabricate a test cell (positive electrode half cell).

Initial charge/discharge characteristics (initial charge/discharge curve)

The initial charge/discharge curve (0.064 $mAcm^{-2}$) measured for each of the cells obtained in Examples 2 and 5 is shown in Fig. 18.

From Fig. 18, it is found that the cells of Example can be charged and discharged with no significant side reactions.

AC impedance (after initial charge)

For each of the cells obtained in Examples 2 and 5, AC impedance was measured using "Solartron 1470E Cell test system" manufactured by Solartron Analytical, and a Cole-Cole plot was obtained. The results (Cole-Cole plots) are shown in Fig. 19.

From Fig. 19, it is found that the cells of Examples 2 and 5 have small interface resistance after charge.

Although several embodiments and/or examples of the present invention have been described above in detail, for those skilled in the art, it is easy to add numerous modifications to these exemplary embodiments and/or examples without substantially departing from the novel teachings and effects of the present invention. Therefore, many of these modifications fall within the scope of the present invention.

The contents of the literature cited in this specification and the applications on which the present application claims priority under the Paris Convention are incorporated herein by reference in their entirety.

## Claims

1. A compound comprising a repeating unit represented by the following formula (1) as an acyclic structure:

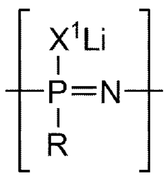

(1)

wherein in the formula (1), $X^1$ is a chalcogen atom; and R is a hydrogen atom or a substituent.

2. The compound according to claim 1, wherein the repeating unit is represented by the following formula (2):

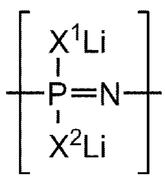

(2)

wherein in the formula (2), $X^1$ and $X^2$ are independently a chalcogen atom.

3. The compound according to claim 2, wherein $X^1$ is S (sulfur atom) or O (oxygen atom), and $X^2$ is S (sulfur atom) or O (oxygen atom).

4. The compound according to any one of claims 1 to 3, which is a reactant of phosphazene and a raw material compound containing Li (lithium atom) and a chalcogen atom.

5. The compound according to any one of daims 1 to 4, wherein no peak is shown in a region from 100°C to 500°C in differential thermal analysis.

6. A composition comprising the compound according to any one of daims 1 to 5.

7. The composition according to claim 6, which comprises a halogen-containing compound.

8. The composition according to claim 7, which comprises a lithium halide as the halogen-containing compound.

9. The composition according to claim 7 or 8, which comprises one or more selected from the group consisting of lithium iodide, lithium bromide and lithium chloride as the halogen-containing compound.

10. The composition according to any one of claims 7 to 9, wherein the halogen-containing compound comprises a halogen derived from phosphazene which is a raw material compound.

11. The composition according to any one of claims 6 to 10, which comprises a compound having a disulfide bond.

12. The composition according to any one of claims 6 to 11, which comprises a solid electrolyte other than the compound comprising the repeating unit represented by the formula (1) as the acyclic structure.

13. A solid electrolyte material comprising the compound according to any one of claims 1 to 5 or the composition according to any one of daims 6 to 12.

14. A sheet for a battery or a battery comprising the solid electrolyte material according to claim 13.

15. A method for producing a compound comprising a repeating unit represented by the following formula (1) as an acyclic structure, comprising:
reacting phosphazene and a raw material compound containing Li (lithium atom) and a chalcogen atom:

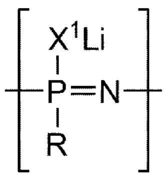

(1)

wherein in the formula (1), $X^1$ is a chalcogen atom; and R is a hydrogen atom or a substituent.

16. The method according to claim 15, wherein the repeating unit is represented by the following formula (2):

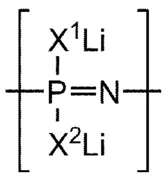

(2)

wherein in the formula (2), $X^1$ and $X^2$ are independently a chalcogen atom.

17. The method according to claim 15 or 16, wherein the phosphazene comprises cyclic phosphazene.

18. The method according to any one of daims 15 to 17, wherein the phosphazene comprises acyclic phosphazene.

19. The method according to claim 18, wherein the acydic phosphazene is a phosphazene polymer.

20. The method according to any one of claims 15 to 19, wherein the phosphazene comprises a halogen atom.

**21.** The method according to any one of daims 15 to 20, wherein the phosphazene comprises a repeating unit represented by the following formula (3).

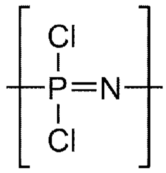

(3)

**22.** The method according to any one of daims 15 to 21, wherein the raw material compound is represented by $Li_2X^3$ (wherein $X^3$ is a chalcogen atom).

**23.** The method according to any one of daims 15 to 22, wherein the raw material compound comprises one or more selected from the group consisting of $Li_2S$ and $Li_2O$.

**24.** The method according to any one of daims 15 to 23, wherein the phosphazene and the raw material compound are reacted with one or more selected from the group consisting of physical energy, thermal energy and chemical energy.

**25.** The method according to any one of daims 15 to 23, wherein the phosphazene and the raw material compound are reacted by a mechanical milling method.

**26.** The method according to any one of daims 15 to 23, wherein the phosphazene and the raw material compound are reacted in a solvent.

**27.** The method according to any one of claims 15 to 26, wherein the phosphazene and the raw material compound are reacted at a temperature of -15 to 250°C.

**28.** The method according to any one of daims 15 to 27, wherein after the phosphazene and the raw material compound are reacted, lithium halide is further added thereto and mixed therewith under heating.

Fig. 1

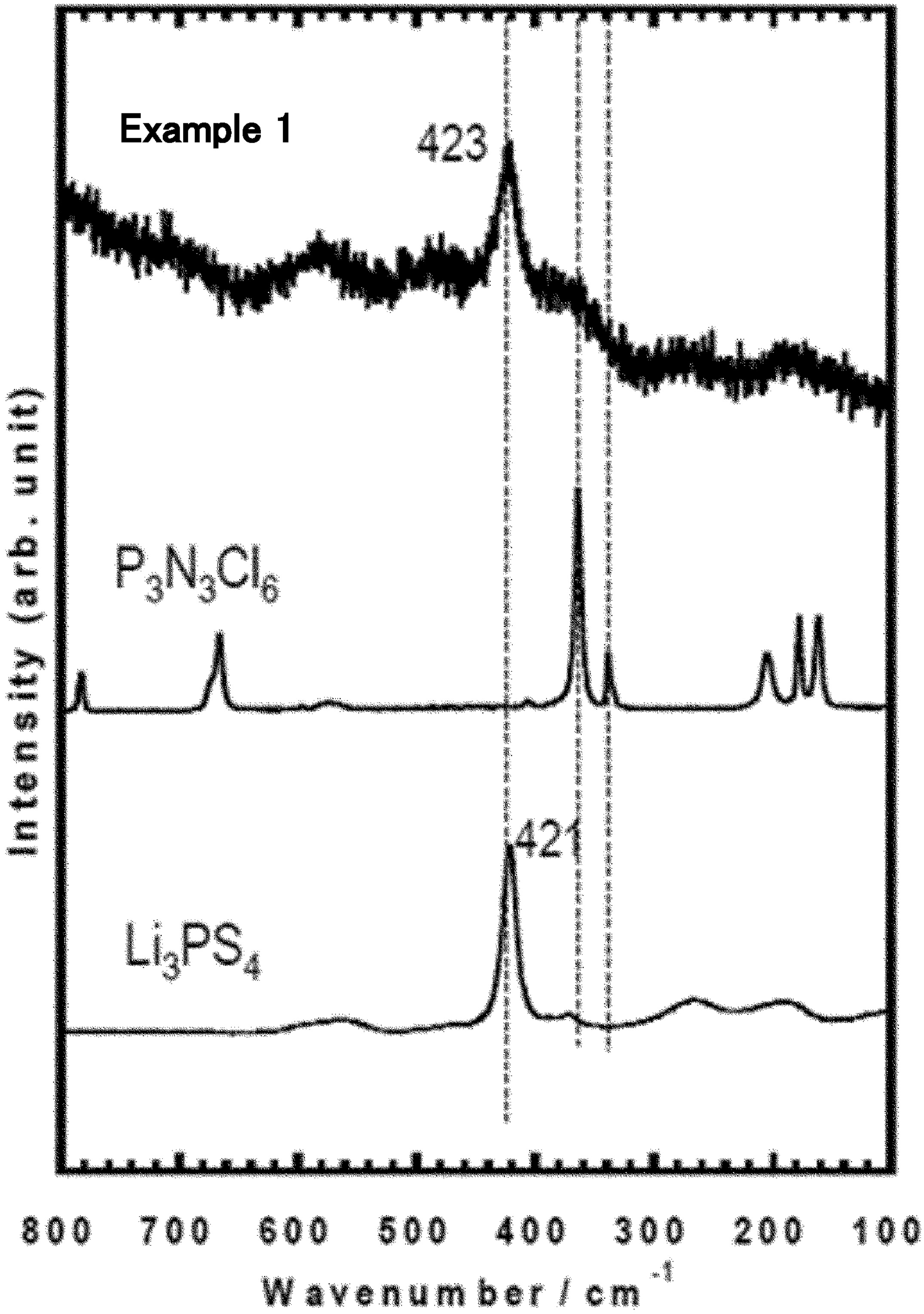

Example 1
423
$P_3N_3Cl_6$
421
$Li_3PS_4$
Intensity (arb. unit)
800
700
600
500
400
300
200
100
Wavenumber / cm-1

Fig. 2

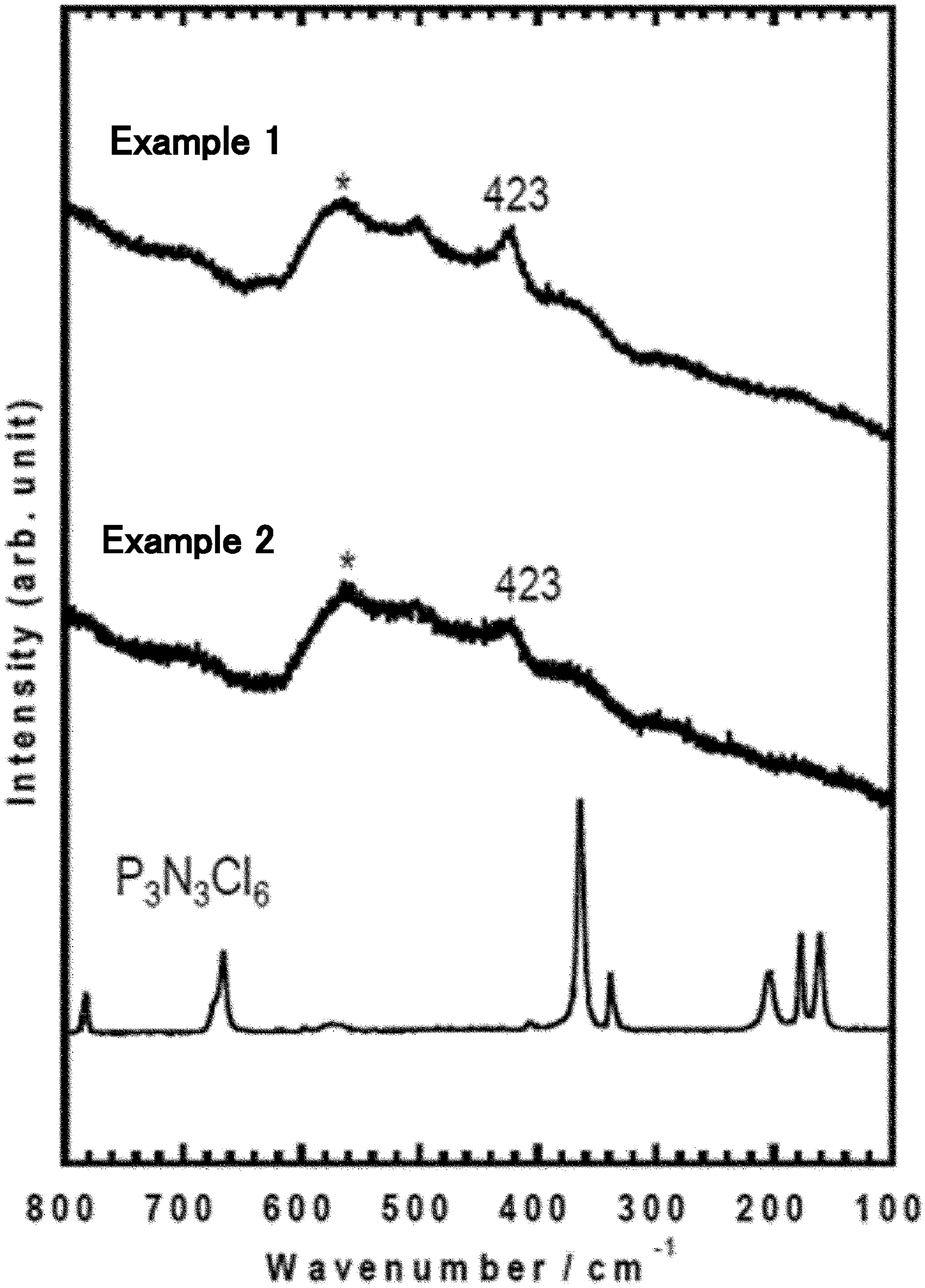
Example 1
*
423
Example 2
*
423
$P_3N_3Cl_6$
Intensity (arb. unit)
800 700 600 500 400 300 200 100
Wavenumber / cm$^{-1}$

Fig. 3

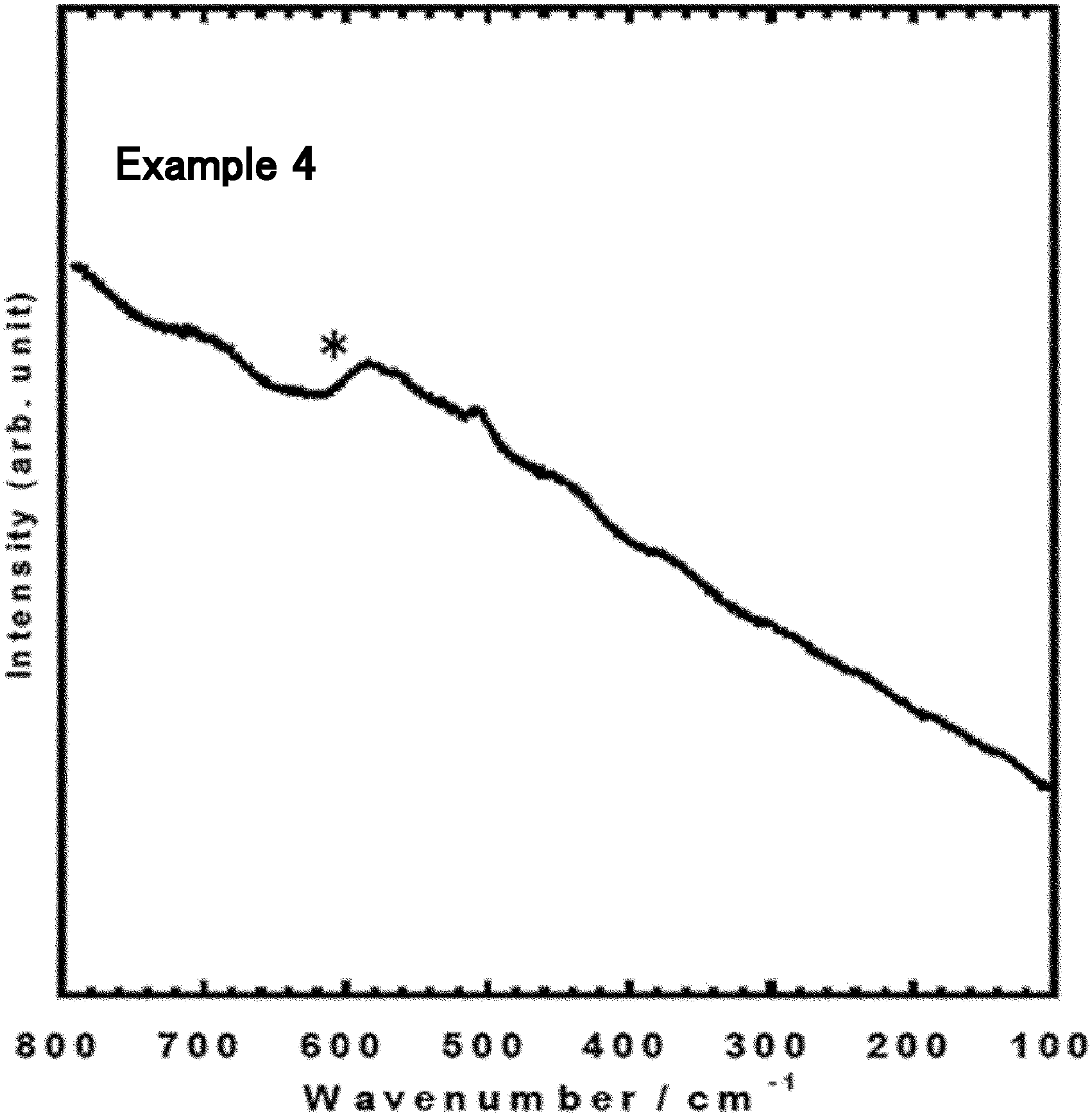
Example 4
*
Intensity (arb. unit)
800
700
600
500
400
300
200
100
Wavenumber / cm$^{-1}$

Fig. 4

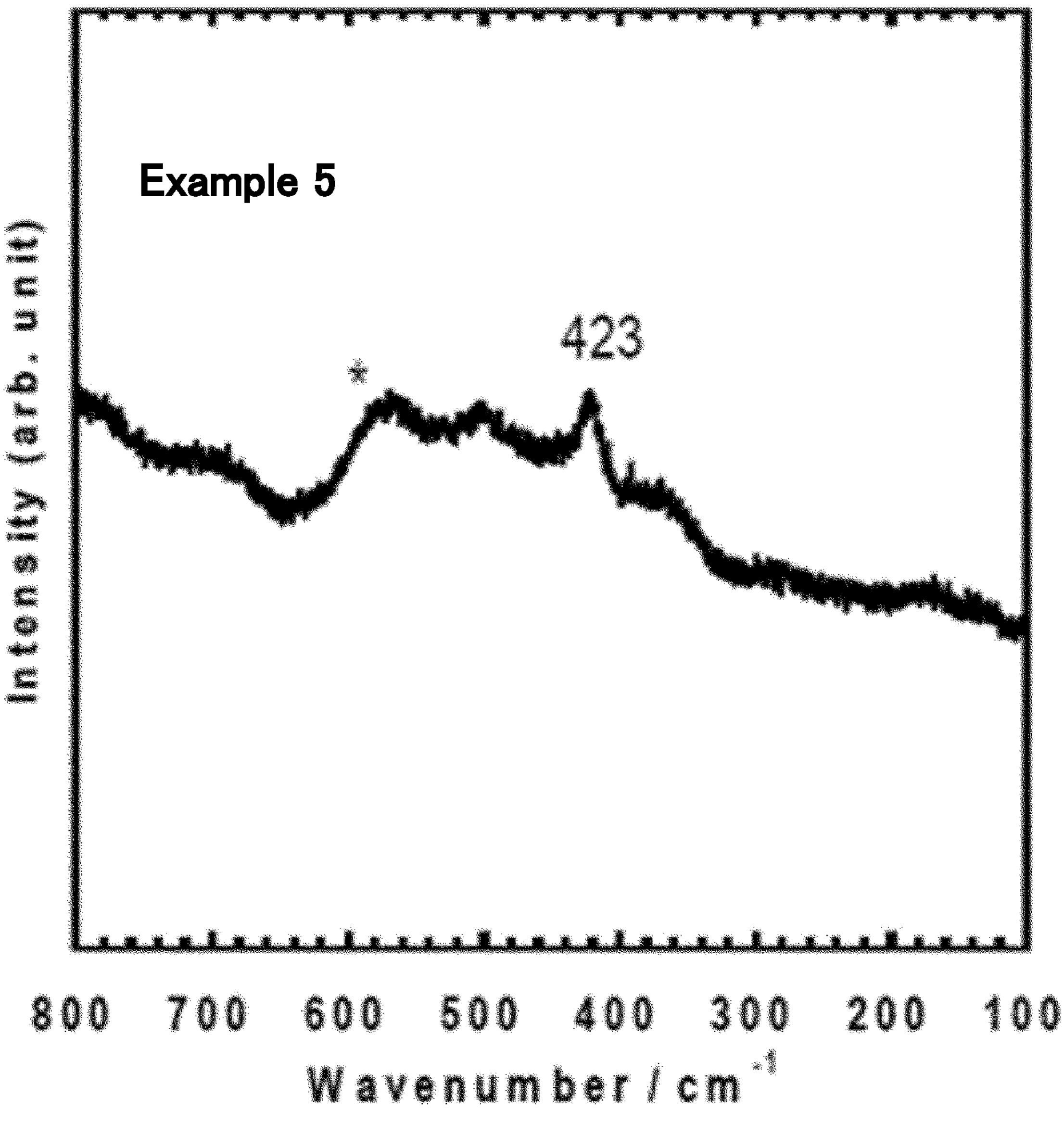
Example 5
423
*
Intensity (arb. unit)
800
700
600
500
400
300
200
100
Wavenumber / cm-1

Fig. 5

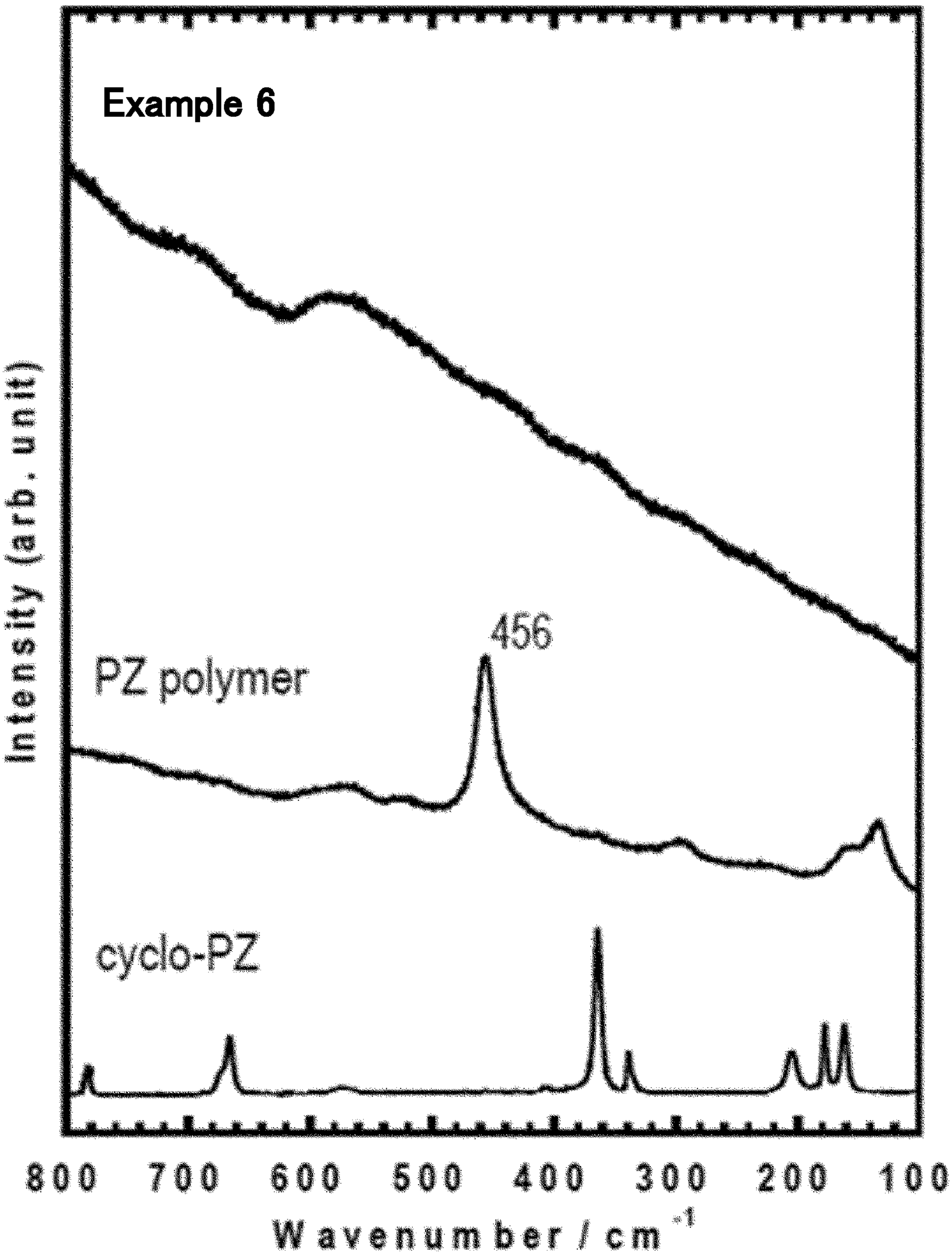
Example 6
456
PZ polymer
cyclo-PZ
Intensity (arb. unit)
800 700 600 500 400 300 200 100
Wavenumber / cm-1

Fig. 6

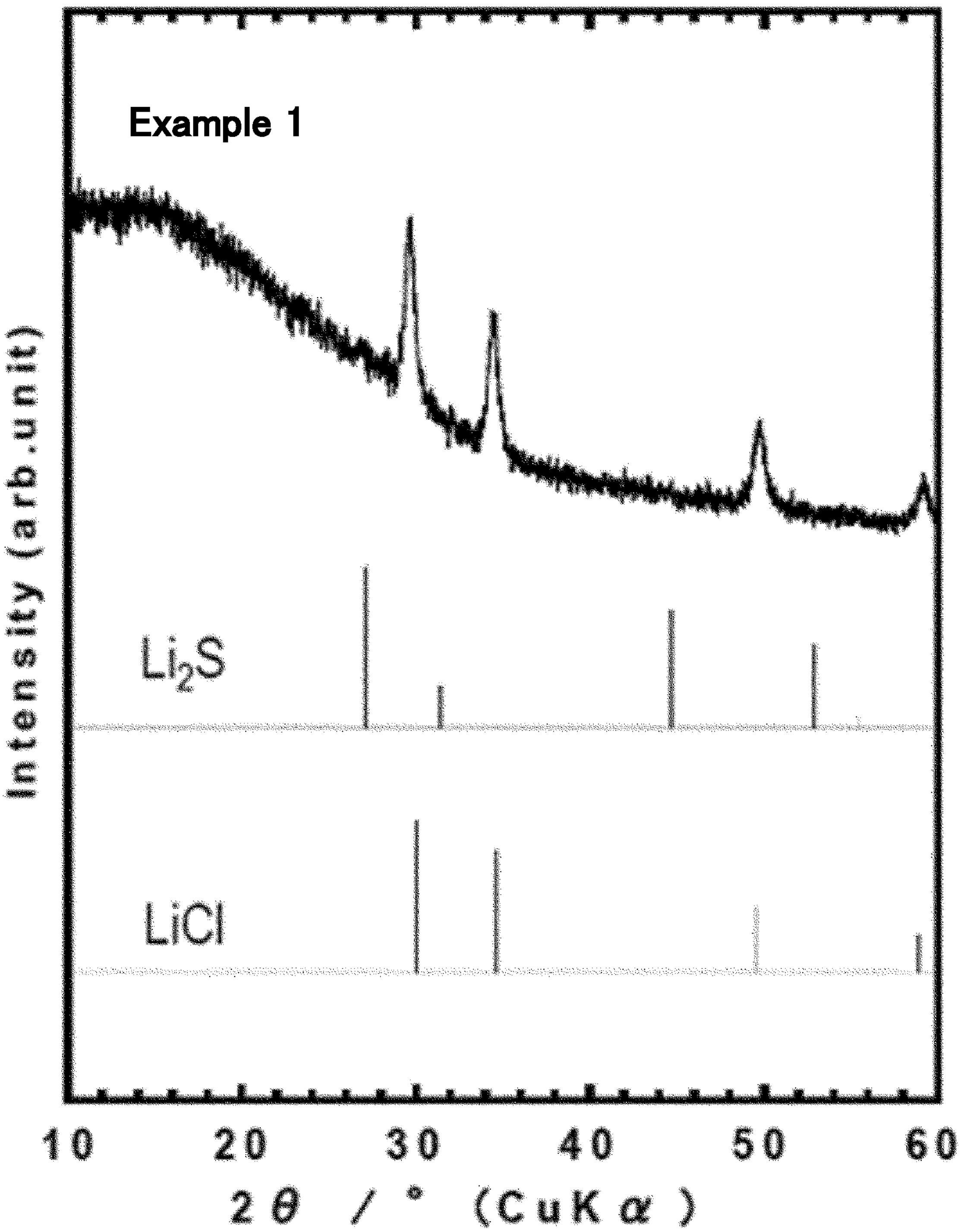
Example 1
Intensity (arb.unit)
$Li_2S$
LiCl
10
20
30
40
50
60
2θ / ° (CuKα)

Fig. 7

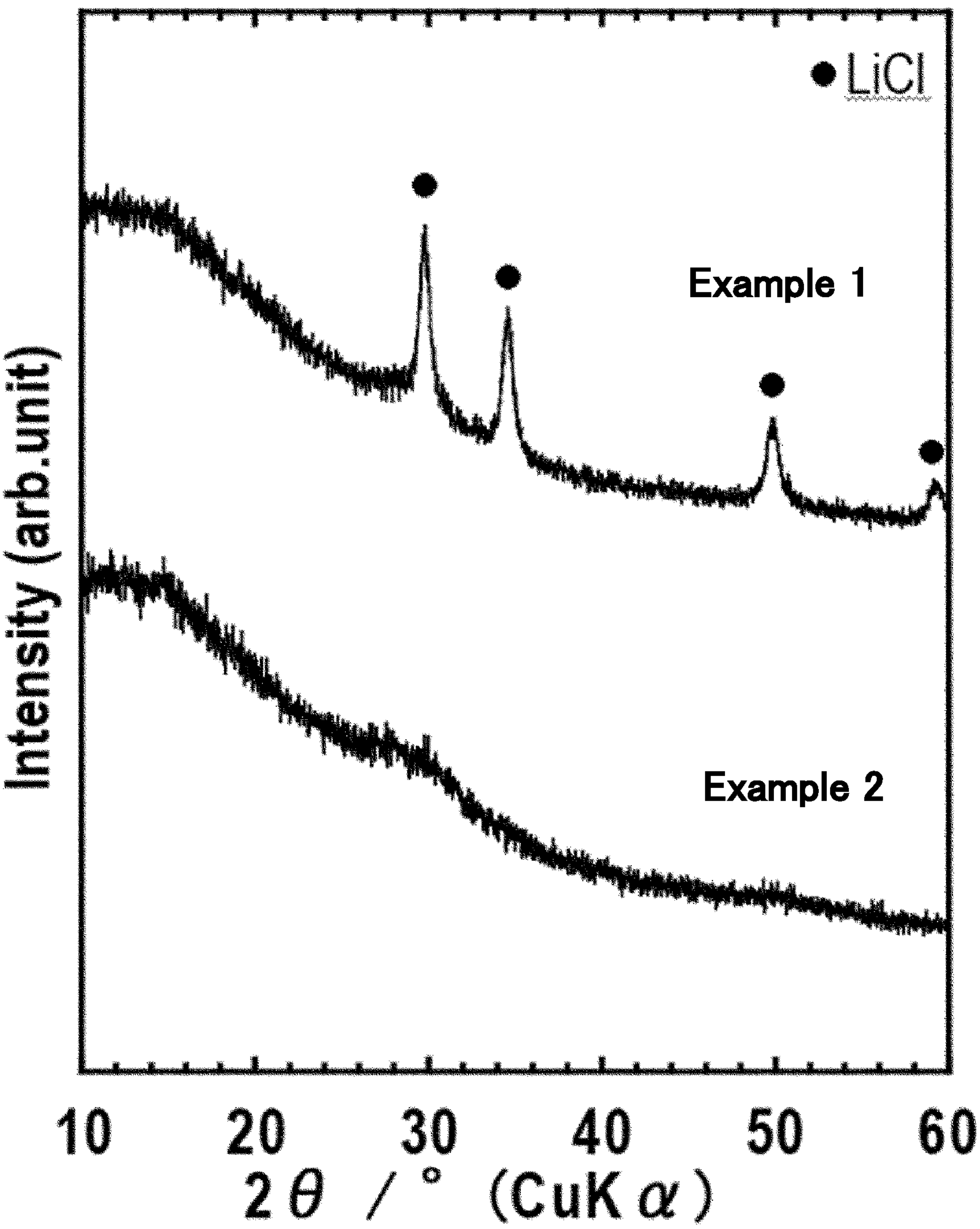
LiCl
Example 1
Example 2
Intensity (arb.unit)
10
20
30
40
50
60
2θ / ° (CuKα)

Fig. 8

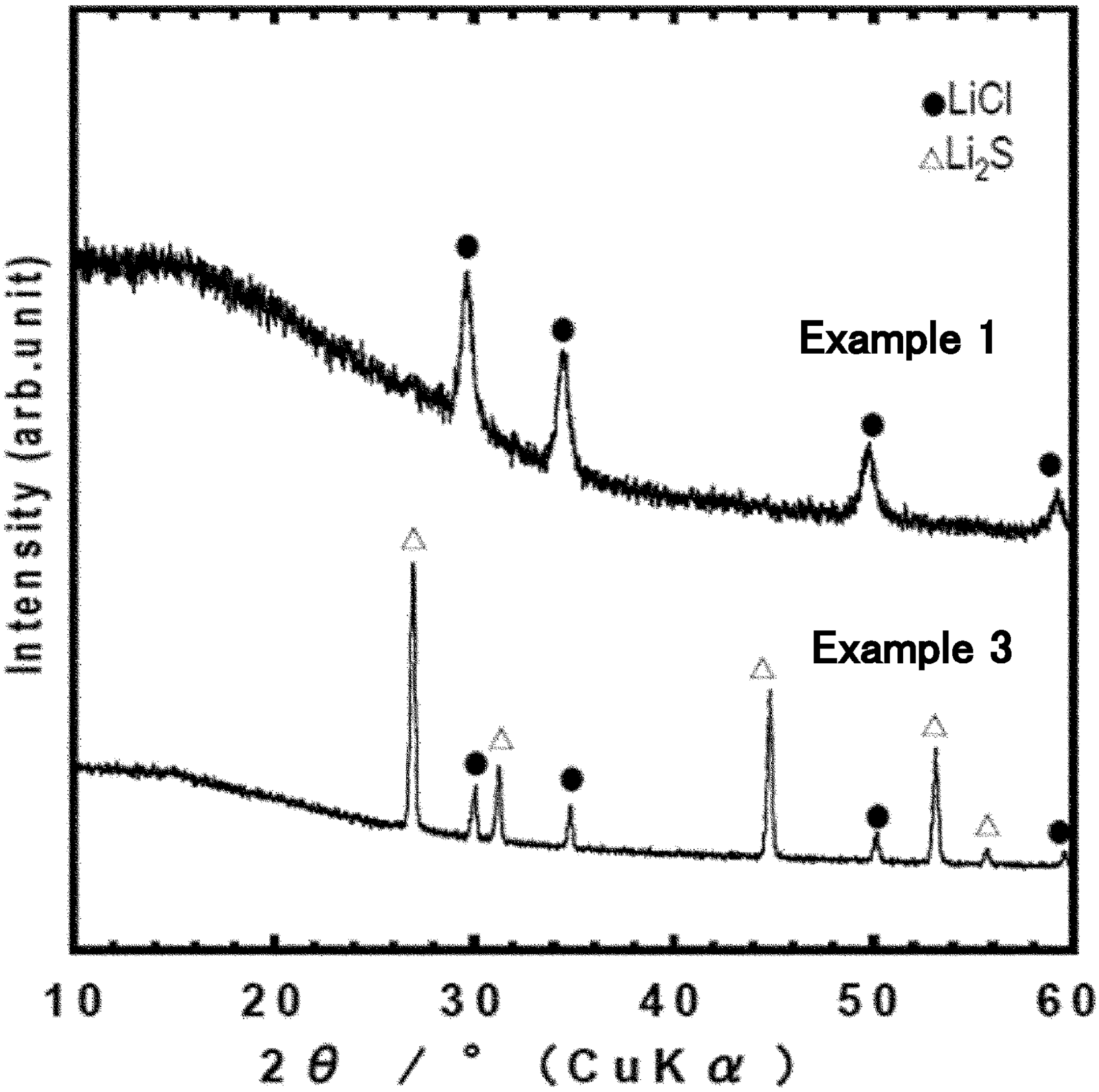
●LiCl
△$Li_2S$
Example 1
Example 3
Intensity (arb.unit)
10
20
30
40
50
60
2θ / ° (CuKα)

Fig. 9

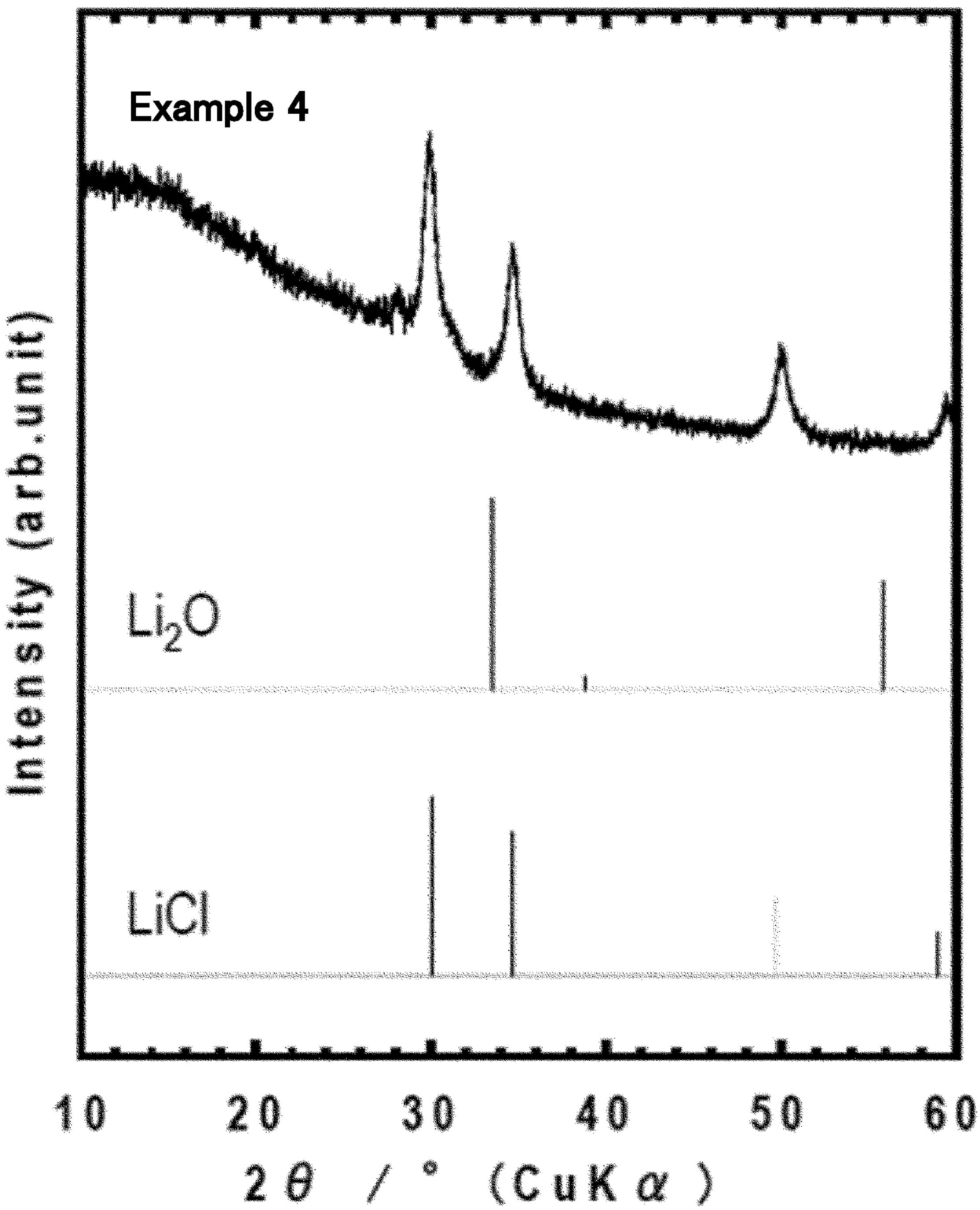
Example 4
Li2O
LiCl
Intensity (arb.unit)
10
20
30
40
50
60
2θ / ° (CuKα)

Fig. 10

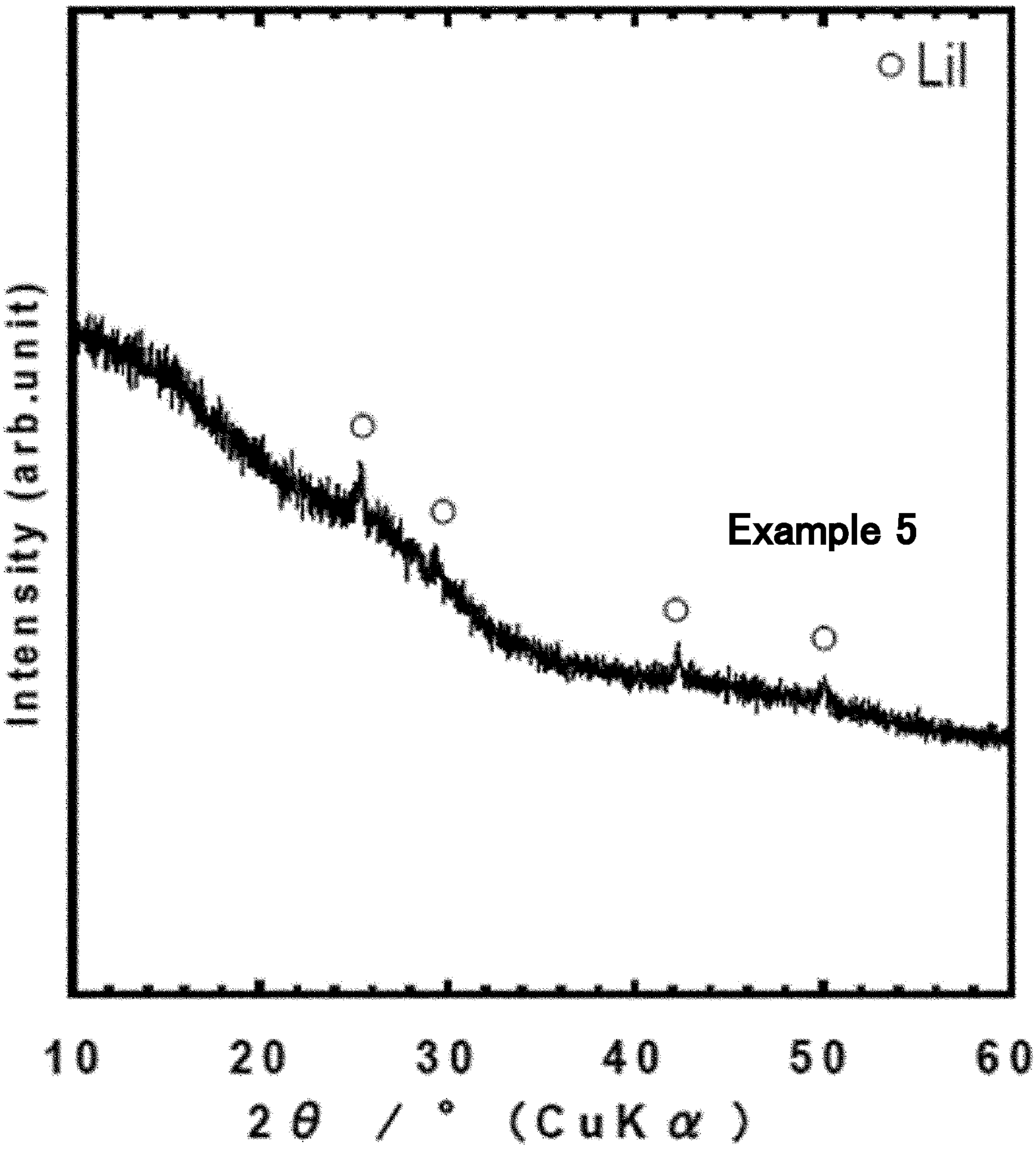

Fig. 11

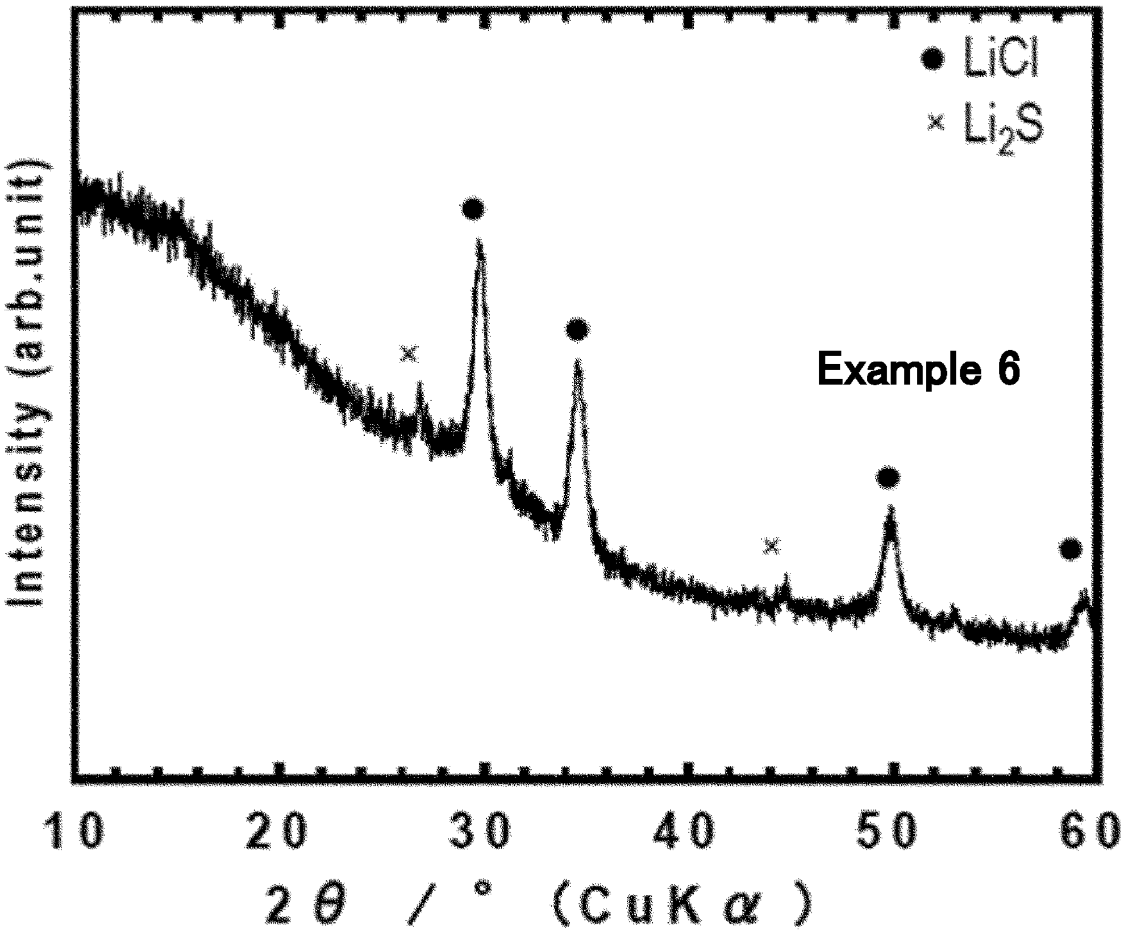
LiCl
$Li_2S$
Example 6
Intensity (arb.unit)
10
20
30
40
50
60
2θ / ° (CuKα)

Fig. 12

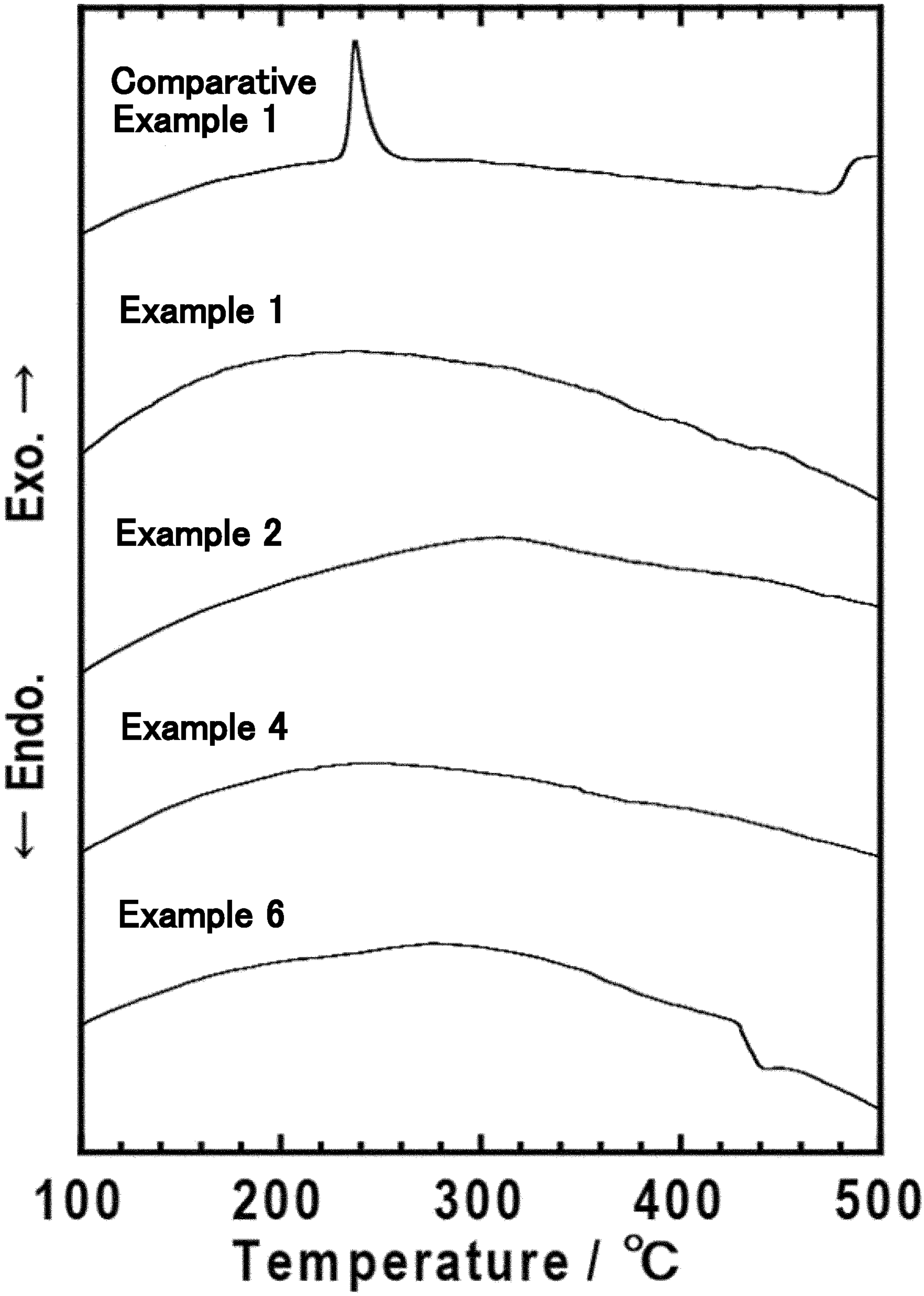
Comparative
Example 1
Example 1
Example 2
Example 4
Example 6
← Endo.   Exo. →
100
200
300
400
500
Temperature / ℃

Fig. 13

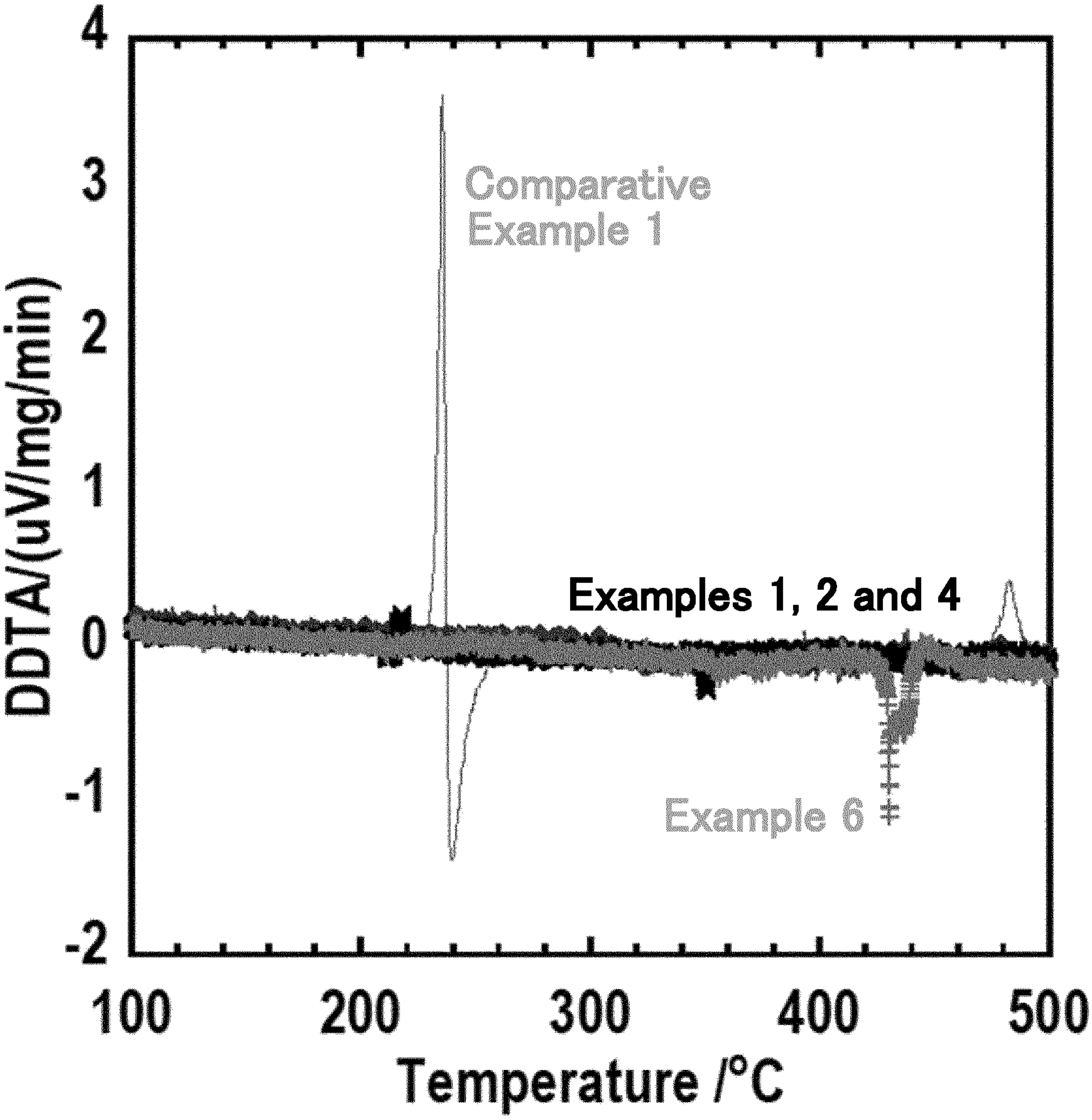

4
3
2
1
0
-1
-2
DDTA/(uV/mg/min)
Comparative
Example 1
Examples 1, 2 and 4
Example 6
100
200
300
400
500
Temperature /°C

Fig. 14

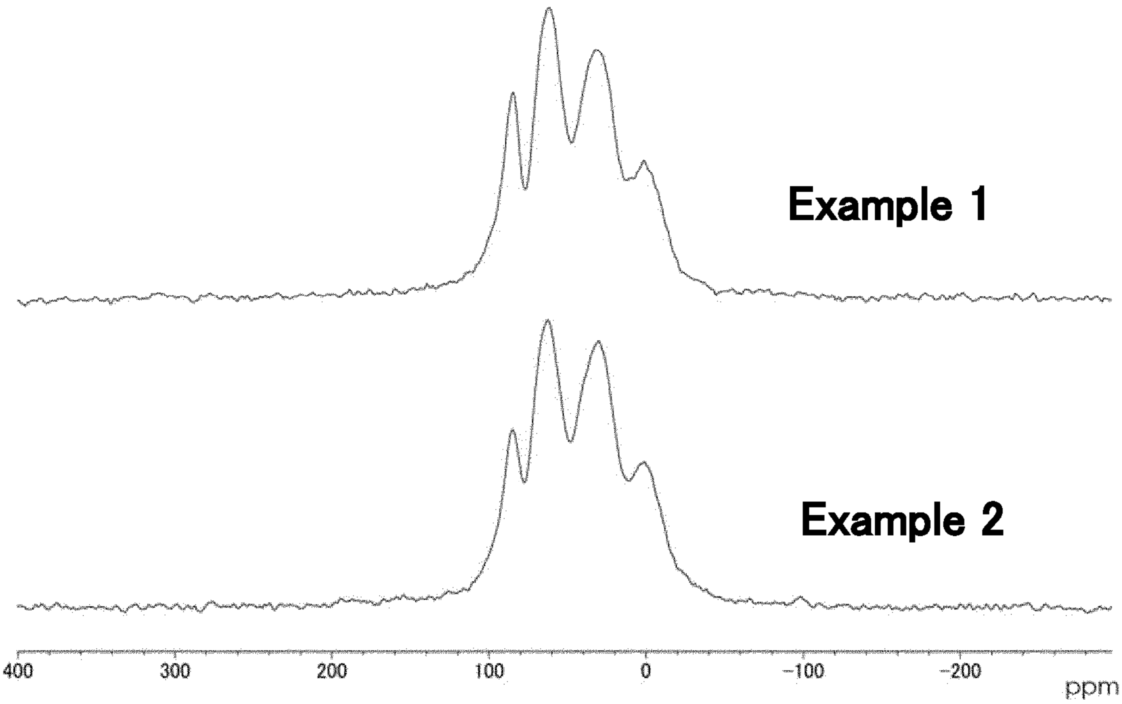

Fig. 15

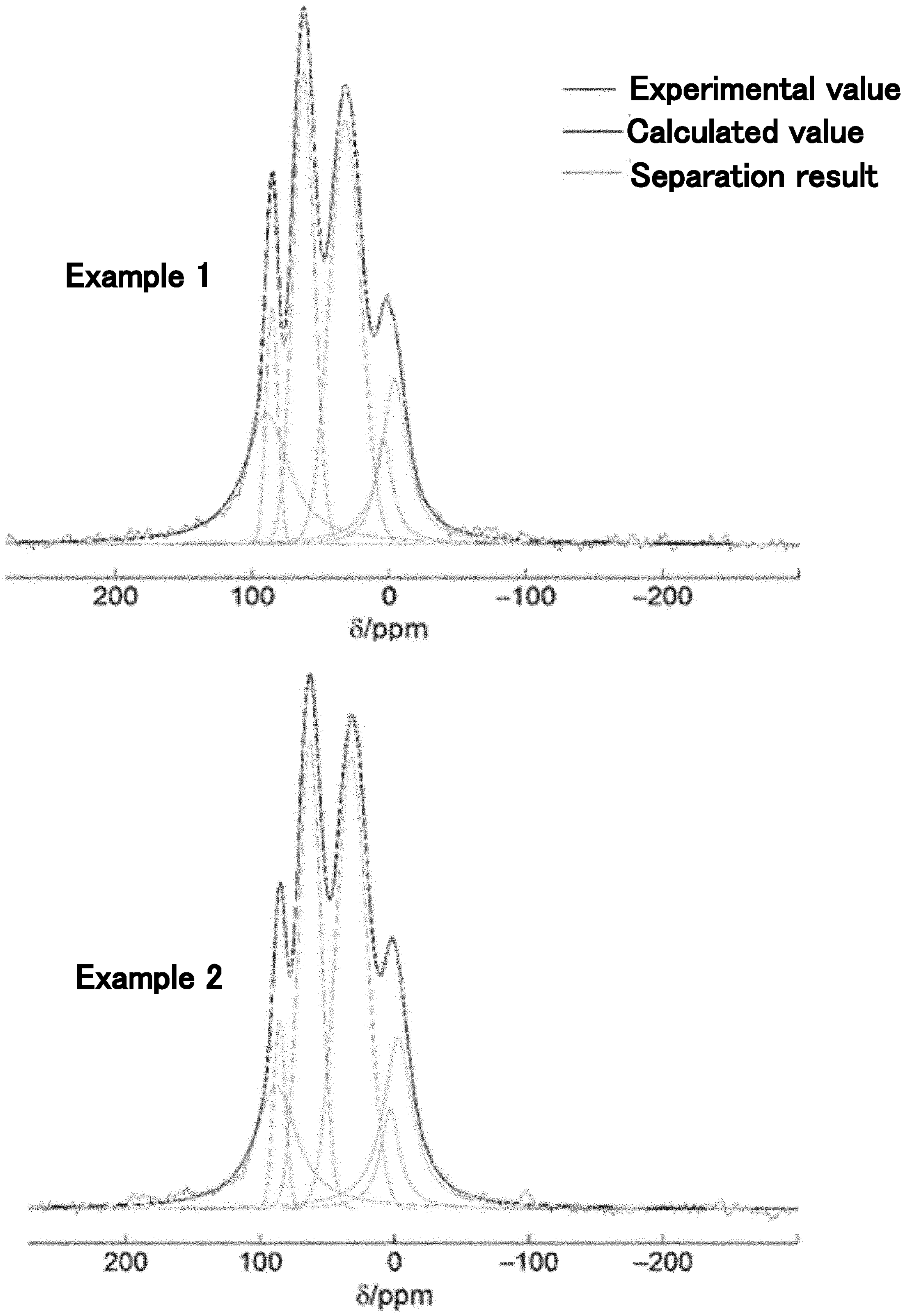
Experimental value
Calculated value
Separation result
Example 1
200
100
0
−100
−200
δ/ppm
Example 2
200
100
0
−100
−200
δ/ppm

Fig. 16

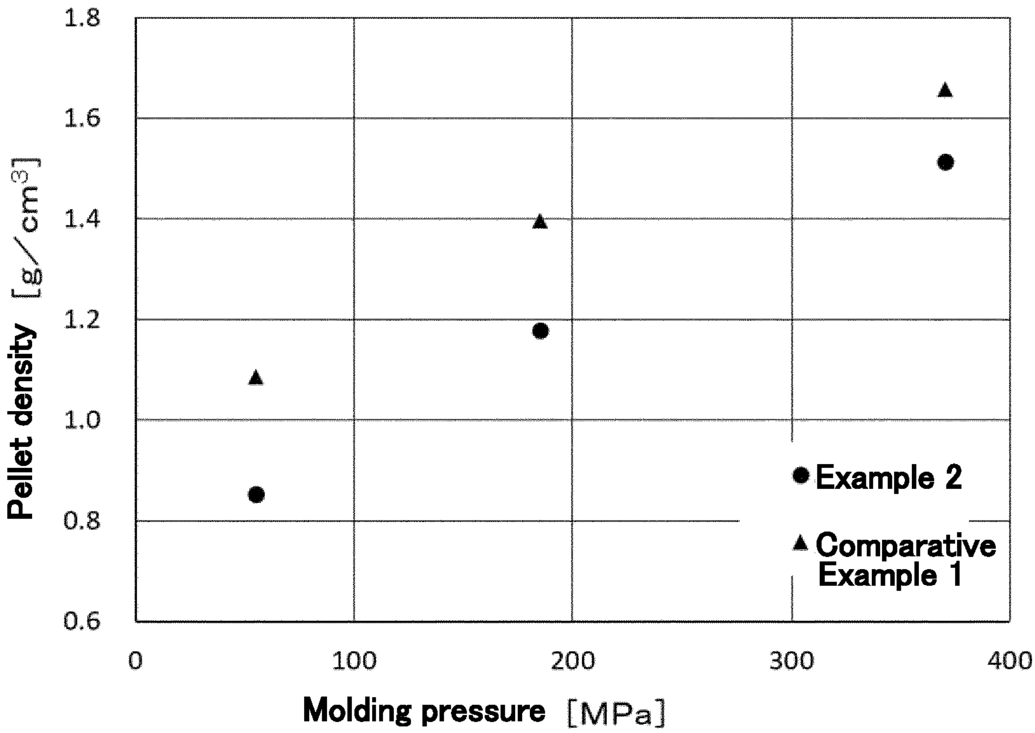
1.8
1.6
1.4
1.2
1.0
0.8
0.6
Pellet density [g/cm3]
0
100
200
300
400
Molding pressure [MPa]
Example 2
Comparative Example 1

Fig. 17

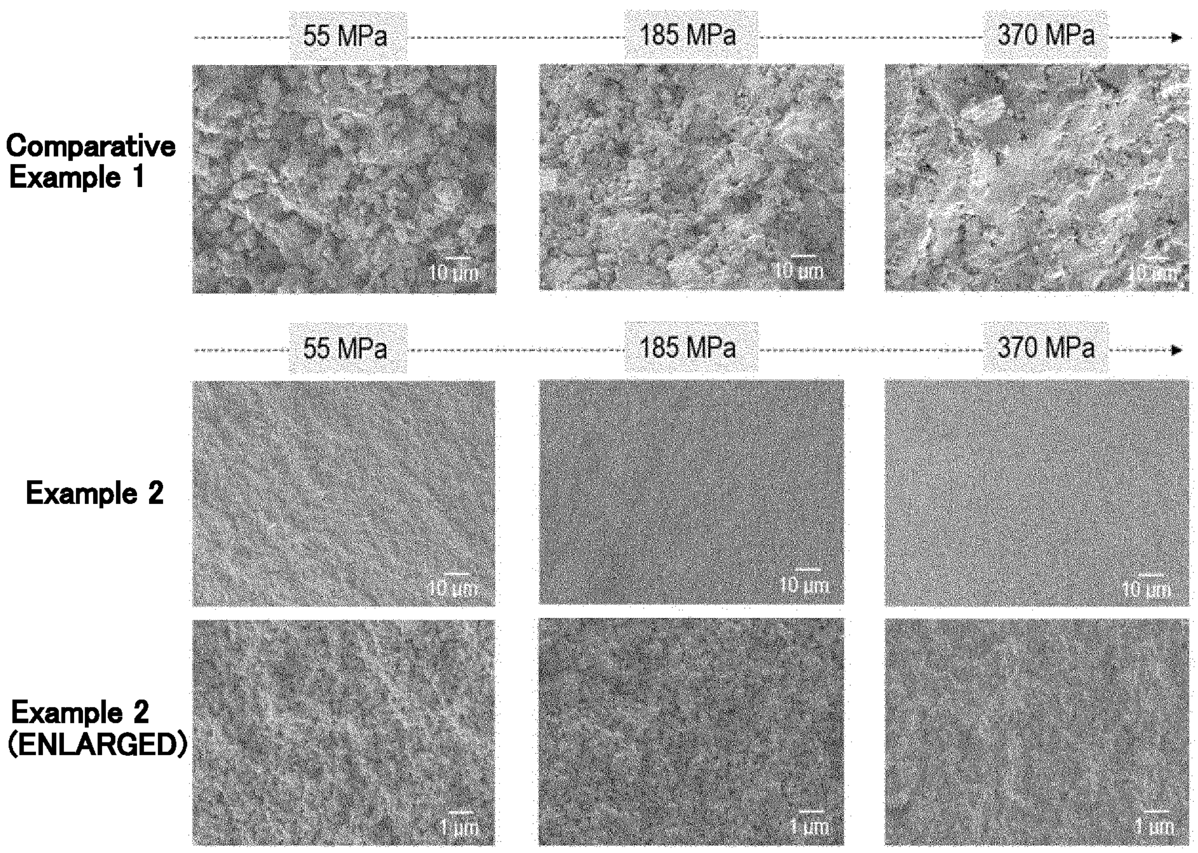
55 MPa
185 MPa
370 MPa
Comparative Example 1
10 μm
55 MPa
185 MPa
370 MPa
Example 2
10 μm
Example 2 (ENLARGED)
1 μm

Fig. 18

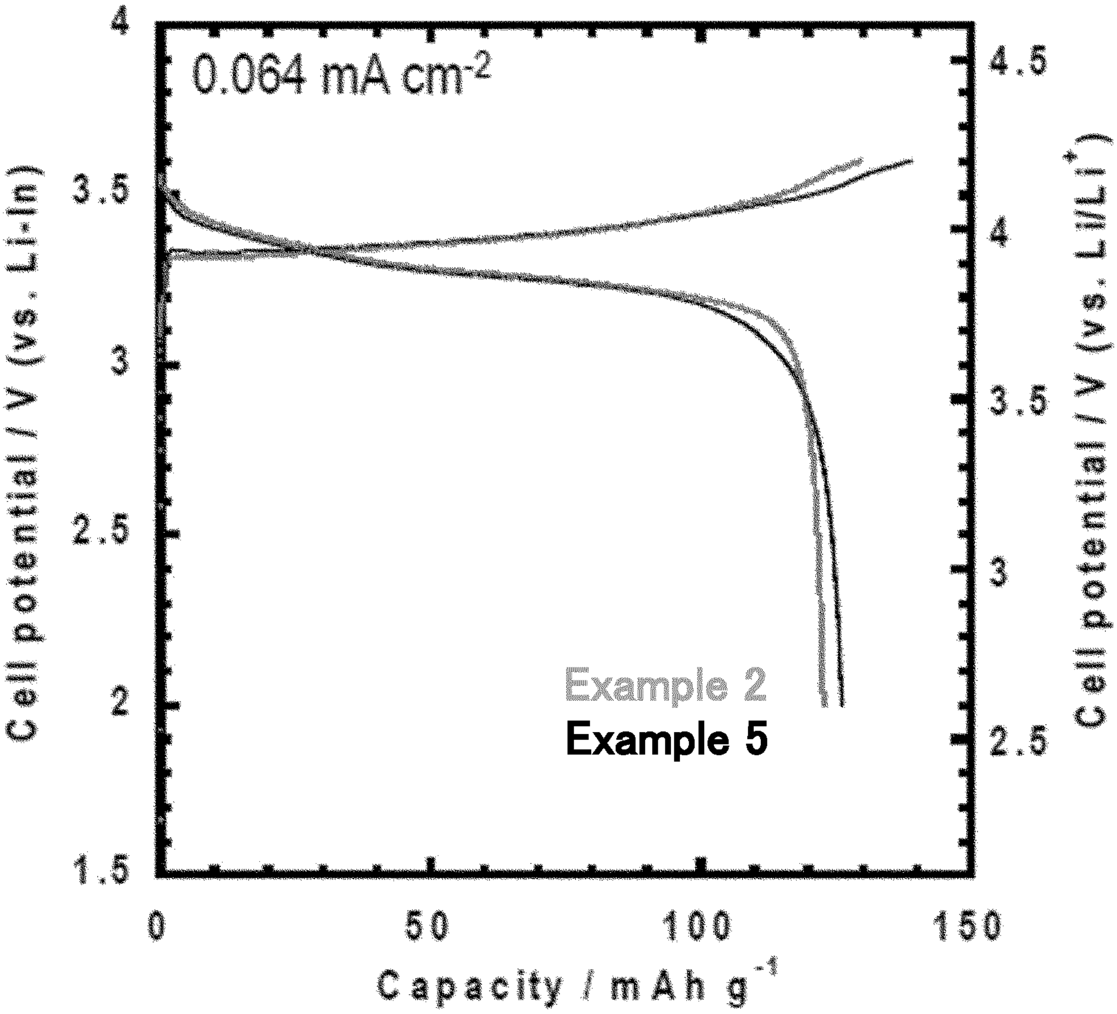
0.064 mA cm-2
Example 2
Example 5
Cell potential / V (vs. Li-In)
Cell potential / V (vs. Li/Li+)
Capacity / mAh g-1
4
3.5
3
2.5
2
1.5
4.5
4
3.5
3
2.5
0
50
100
150

Fig. 19

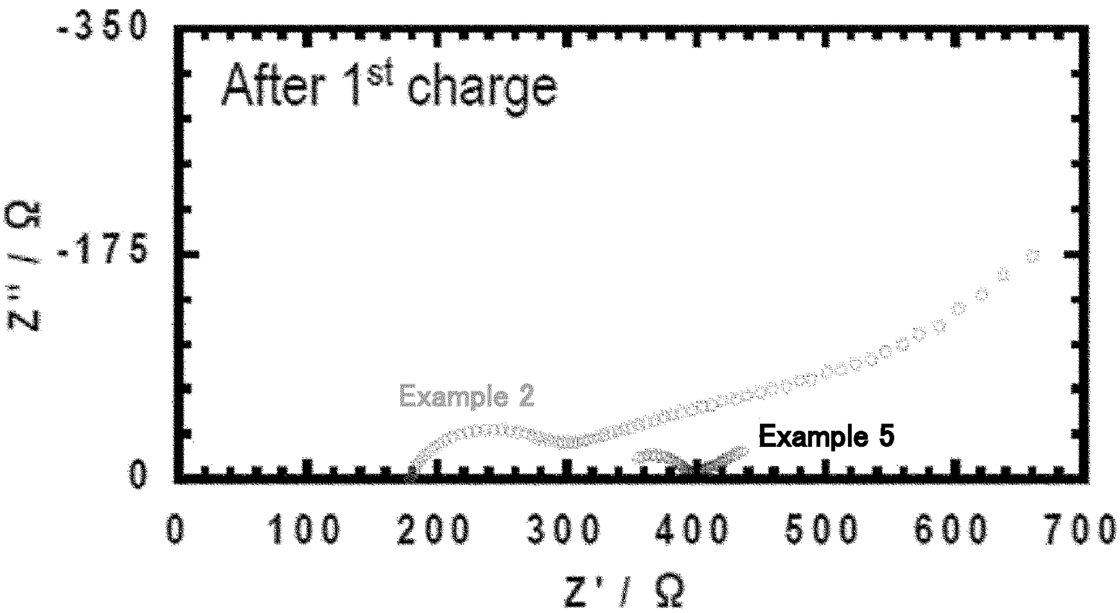
After 1st charge
Example 2
Example 5
Z'' / Ω
Z' / Ω
-350
-175
0
0
100
200
300
400
500
600
700

## INTERNATIONAL SEARCH REPORT

International application No.
**PCT/JP2023/042602**

### A. CLASSIFICATION OF SUBJECT MATTER

***C01B 25/14***(2006.01)i; ***C01B 25/10***(2006.01)i; ***H01B 1/06***(2006.01)i; ***H01B 1/10***(2006.01)i; ***H01M 10/0562***(2010.01)i
FI: C01B25/14; C01B25/10; H01B1/06 A; H01B1/10; H01M10/0562

According to International Patent Classification (IPC) or to both national classification and IPC

### B. FIELDS SEARCHED

Minimum documentation searched (classification system followed by classification symbols)

C01B25/14; C01B25/10; H01B1/06; H01B1/10; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2011/059083 A1 (NEC ENERGY DEVICES, LTD.) 19 May 2011 (2011-05-19) claims 1-4, paragraphs [0030]-[0061] | 1-28 |
| A | JP 2020-514954 A (LG CHEM, LTD.) 21 May 2020 (2020-05-21) claims 1-18, paragraphs [0131]-[0144] | 1-28 |
| A | JP 2016-162523 A (FUJIFILM CORP.) 05 September 2016 (2016-09-05) entire text | 1-28 |
| A | JP 2020-087831 A (CENTRAL GLASS CO., LTD.) 04 June 2020 (2020-06-04) paragraph [0067] | 1-28 |

☐ Further documents are listed in the continuation of Box C.　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/042602**

| Patent document cited in search report | Publication date (day/month/year) | Patent family member(s) | Publication date (day/month/year) |
|---|---|---|---|
| WO 2011/059083 A1 | 19 May 2011 | US 2012/0288769 A1<br>claims 1-4, paragraphs [0028]-[0053]<br>EP 2500975 A1<br>CN 102668220 A | |
| JP 2020-514954 A | 21 May 2020 | US 2020/0020934 A1<br>claims 1-18, paragraphs [0128]-[0141]<br>WO 2019/045443 A1<br>EP 3546429 A1<br>KR 10-2019-0025501 A<br>CN 110225885 A | |
| JP 2016-162523 A | 05 September 2016 | (Family: none) | |
| JP 2020-087831 A | 04 June 2020 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5757284 B


### Non-patent literature cited in the description


- **G.-X. XU et al.** Inorganic polymer phosphazene disulfide as cathode material for rechargeable lithium batteries. *Solid State Ionics*, 2006, vol. 177, 305-309
- FT-NMR Data Processing by Personal Computer. Sankyo Shuppan Co., Ltd.